# EUROPEAN PATENT APPLICATION

(11) **EP 4 768 807 A1**
(43) Date of publication of application: **01.07.2026**
(21) Application number: 25755066.5
(22) Date of filing: 14.01.2025
(51) Int. Cl.: F24F 8/80, F24F 13/12, F24F 13/20, F24F 11/72, H02K 11/215, F24F 11/50, F24F 8/00, F24F 11/89

(54) **AIR CONDITIONER AND METHOD FOR CONTROLLING SAME**

(30) Priority: 15.02.2024 KR 20240021957; 07.06.2024 KR 20240074608
(71) Applicant: Samsung Electronics Co., Ltd., Suwon-si, Gyeonggi-do 16677 (KR)
(72) Inventor: CHUN, Sunghyun, Suwon-si, Gyeonggi-do 16677 (KR); KIM, Nakhyun, Suwon-si, Gyeonggi-do 16677 (KR); KIM, Juyoung, Suwon-si, Gyeonggi-do 16677 (KR); PARK, Juwan, Suwon-si, Gyeonggi-do 16677 (KR); LEE, Churju, Suwon-si, Gyeonggi-do 16677 (KR); LEE, Hojin, Suwon-si, Gyeonggi-do 16677 (KR); CHO, Seoyoung, Suwon-si, Gyeonggi-do 16677 (KR)
(74) Representative: Walaski, Jan Filip
(86) International application number: PCT/KR2025/000802
(87) International publication number: WO 2025/173944

(57) **Abstract**

An air conditioner is provided. The air conditioner includes a housing, a discharge cover configured to cover a discharge hole formed on an upper part of the housing, and including a cover opening through which air is discharged, a rotation transmission part coupled to the discharge cover and configured to rotate the discharge cover, a cover rotation motor configured to rotate the rotation transmission part in a first direction or a second direction opposite to the first direction, a fan case equipped with a discharge fan configured to move air toward the discharge hole and the cover opening, a magnet provided at a position of the rotation transmission part, a first sensor disposed at a first position of the fan case and configured to detect the magnet, a second sensor disposed at a second position of the fan case and configured to detect the magnet, the second position being spaced apart from the first position, memory storing one or more computer programs, and one or more processors communicatively coupled to the cover rotation motor, the first sensor, the second sensor, and the memory, wherein the one or more computer programs include computer-executable instructions that, when executed by the one or more processors individually or collectively, cause the air conditioner to move the rotation transmission part, via the cover rotation motor, to a reference position based on a power off condition of the air conditioner being satisfied, and determine whether to stop an operation of the cover rotation motor based on whether the magnet is detected by the first sensor or the second sensor.

## Description

### [TECHNICAL FIELD]

The disclosure relates to an air conditioner that may adjust a direction of air discharge, and a method for controlling the same.

### [BACKGROUND ART]

An air conditioner may refer to an apparatus that performs at least one of the functions such as air purification, ventilation, humidity control, cooling or heating in an air conditioning space.

For example, an air conditioner may include an air purifier to remove contaminants from the air. The air purifier may remove germs, viruses, mold, fine dust, and chemicals in the drawn-in air, which cause unpleasant odors.

The air purifier may include a purification device for purifying contaminated indoor air. Air drawn into the air purifier may be purified into clean air with the contaminants removed therefrom while passing through the purification device, and the purified air may be discharged from the air purifier. For example, the purification device may include a filter and/or a dust collector.

The air purifier may be used in various indoor spaces. The air purifier may include a discharge device for controlling at least one of a discharge direction, a discharge speed, and a discharge amount of purified air.

### [DISCLOSURE]

### [Technical Problem]

Aspect of the disclosure is to provide an air conditioner and a method for controlling the same that may easily move a discharge cover and a rotation transmission part that rotates the discharge cover to a reference position.

Aspect of the disclosure is to provide an air conditioner and a method for controlling the same that may feedback control a cover rotation motor that rotates a rotation transmission part using a magnet and a plurality of magnetic sensors.

In accordance with an aspect of the disclosure, an air conditioner is provided. The air conditioner includes a housing, a discharge cover configured to cover a discharge hole formed on an upper part of the housing, and including a cover opening through which air is discharged, a rotation transmission part coupled to the discharge cover and configured to rotate the discharge cover, a cover rotation motor configured to rotate the rotation transmission part in a first direction or a second direction opposite to the first direction, a fan case equipped with a discharge fan configured to move air toward the discharge hole and the cover opening, a magnet provided at a position of the rotation transmission part, a first sensor disposed at a first position of the fan case and configured to detect the magnet, a second sensor disposed at a second position of the fan case and configured to detect the magnet, the second position being spaced apart from the first position, memory storing one or more computer programs, and one or more processors communicatively coupled to the cover rotation motor, the first sensor, the second sensor, and the memory, wherein the one or more computer programs include computer-executable instructions that, when executed by the one or more processors individually or collectively, cause the air conditioner to move the rotation transmission part, via the cover rotation motor, to a reference position based on a power off condition of the air conditioner being satisfied, and determine whether to stop an operation of the cover rotation motor based on whether the magnet is detected by the first sensor or the second sensor.

In accordance with another aspect of the disclosure, a method for operating an air conditioner including a discharge hole formed on an upper part of a housing, a discharge cover configured to cover the discharge hole and including a cover opening through which air is discharged, a fan case equipped with a discharge fan configured to move air toward the discharge hole and the cover opening, and a processor is provided. The method includes identifying, by the processor, whether a power off condition of the air conditioner is satisfied, controlling a cover rotation motor to rotate a rotation transmission part coupled to the discharge cover so as to move the rotation transmission part to a reference position based on the power off condition of the air conditioner being satisfied, identifying whether a magnet provided at a position of the rotation transmission part is detected by a first sensor disposed at a first position of the fan case or a second sensor disposed at a second position of the fan case, the second position being spaced apart from the first position, and determining whether to stop an operation of the cover rotation motor based on whether the magnet is detected by the first sensor or the second sensor.

According to the disclosure, an air conditioner and a method for controlling the same easily move a discharge cover and a rotation transmission part that rotates the discharge cover to a reference position.

According to the disclosure, an air conditioner and a method for controlling the same feedback control a cover rotation motor that rotates a rotation transmission part to accurately move the rotation transmission part to a reference position.

Other aspects, advantages, and salient features of the disclosure will become apparent to those skilled in the art from the following detailed description, which, taken in conjunction with the annexed drawings, discloses various embodiments of the disclosure.

### [DESCRIPTION OF DRAWINGS]

FIG. 1 illustrates an air conditioner according to an embodiment of the disclosure;
FIG. 2 is an exploded view illustrating a portion of blower panels of an air conditioner according to an embodiment of the disclosure;
FIG. 3 is a cross-sectional view of an air conditioner according to an embodiment of the disclosure;
FIG. 4 is an exploded view illustrating a discharge device separated from a housing of an air conditioner according to an embodiment of the disclosure;
FIG. 5 is an exploded view illustrating a discharge device according to an embodiment of the disclosure;
FIG. 6 is a cross-sectional view of a portion of a discharge device according to an embodiment of the disclosure;
FIG. 7 illustrates a state in which a discharge device closes a discharge hole according to an embodiment of the disclosure;
FIG. 8 illustrates a coupling relationship between components related to movement of a discharge cover in a state where a discharge device closes a discharge hole according to an embodiment of the disclosure;
FIG. 9 illustrates lower parts of components related to movement of a discharge cover in a state where a discharge device closes a discharge hole according to an embodiment of the disclosure;
FIG. 10 illustrates a state in which a discharge device opens a discharge hole according to an embodiment of the disclosure;
FIG. 11 illustrates a coupling relationship between components related to movement of a discharge cover in a state where a discharge device opens a discharge hole according to an embodiment of the disclosure;
FIG. 12 illustrates lower parts of components related to movement of a discharge cover in a state where a discharge device opens a discharge hole according to an embodiment of the disclosure;
FIG. 13 illustrates a coupling relationship between components related to a rotation of a discharge cover in a state where a discharge device opens a discharge hole according to an embodiment of the disclosure;
FIG. 14 illustrates a state where a discharge cover of a discharge device is rotated according to an embodiment of the disclosure;
FIG. 15 illustrates a coupling relationship between components related to a rotation of a discharge cover in a state where the discharge cover of a discharge device is rotated according to an embodiment of the disclosure;
FIG. 16 is a top view of a partial configuration of a discharge device according to an embodiment of the disclosure;
FIG. 17 illustrates a magnet provided in a rotation transmission part of the discharge device shown in FIG. 16 according to an embodiment of the disclosure;
FIG. 18 illustrates sensors provided in a fan case of the discharge device shown in FIG. 16 according to an embodiment of the disclosure;
FIG. 19 is a control block diagram of an air conditioner according to an embodiment of the disclosure;
FIG. 20 is a flowchart briefly illustrating a method for controlling an air conditioner according to an embodiment of the disclosure; and
FIG. 21 is a flowchart illustrating a method for controlling an air conditioner according to an embodiment of the disclosure.

### [MODES OF THE DISCLOSURE]

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

In describing of the drawings, similar reference numerals may be used for similar or related elements.

It is to be understood that the singular forms "a," "an," and "the" include plural referents unless the context clearly dictates otherwise. Thus, for example, reference to "a component surface" includes reference to one or more of such surfaces.

In the disclosure, phrases, such as "A or B," "at least one of A and B," "at least one of A or B," "A, B or C," "at least one of A, B and C," and "at least one of A, B, or C" may include any one or all possible combinations of the items listed together in the corresponding phrase among the phrases.

As used herein, the term "and/or" includes any and all combinations of one or more of the associated listed items.

Terms such as "1st," "2nd," "primary," or "secondary" may be used simply to distinguish an element from other elements, without limiting the element in other aspects (e.g., importance or order).

When an element (e.g., a first element) is referred to as being "(functionally or communicatively) coupled" or "connected" to another element (e.g., a second element), the first element may be connected to the second element, directly (e.g., wired), wirelessly, or through a third element.

It will be understood that when the terms "includes," "comprises," "including," and/or "comprising" are used in the disclosure, they specify the presence of the specified features, figures, steps, operations, components, members, or combinations thereof, but do not preclude the presence or addition of one or more other features, figures, steps, operations, components, members, or combinations thereof.

When a given element is referred to as being "connected to," "coupled to," "supported by" or "in contact with" another element, it is to be understood that it may be directly or indirectly connected to, coupled to, supported by, or in contact with the other element. When a given element is indirectly connected to, coupled to, supported by, or in contact with another element, it is to be understood that it may be connected to, coupled to, supported by, or in contact with the other element through a third element.

It will also be understood that when an element is referred to as being "on" another element, it may be directly on the other element or intervening elements may also be present.

An air conditioner according to various embodiments is a device that performs functions such as purification, ventilation, humidity control, cooling or heating in an air conditioning space (hereinafter referred to as "indoor space"), and in particular a device having at least one of these functions.

According to an embodiment, an air conditioner may include a heat pump device to perform a cooling function or a heating function. The heat pump device may include a refrigeration cycle in which a refrigerant is circulated through a compressor, a first heat exchanger, and an expansion device and a second heat exchanger. All of the components of the heat pump device may be embedded in a single housing forming an exterior of an air conditioner, which includes a window-type air conditioner or a portable air conditioner. On the other hand, some components of the heat pump device may be divided and embedded in a plurality of housings forming a single air conditioner, which includes a wall-mounted air conditioner, a stand-type air conditioner, and a system air conditioner.

The air conditioner including the plurality of housings may include at least one outdoor unit installed outdoors and at least one indoor unit installed indoors. For example, the air conditioner may be provided such that a single outdoor unit and a single indoor unit are connected by a refrigerant pipe. Alternatively, the air conditioner may be provided such that a single outdoor unit is connected to two or more indoor units by a refrigerant pipe. Alternatively, the air conditioner may be provided such that two or more outdoor units and two or more indoor units are connected by a plurality of refrigerant pipes.

The outdoor unit may be electrically connected to the indoor unit. For example, information (or commands) for controlling the air conditioner may be received through an input interface provided in the outdoor unit or the indoor unit. The outdoor unit and the indoor unit may operate simultaneously or sequentially in response to a user input.

The air conditioner may include an outdoor heat exchanger provided in the outdoor unit, an indoor heat exchanger provided in the indoor unit, and a refrigerant pipe connecting the outdoor heat exchanger and the indoor heat exchanger.

The outdoor heat exchanger may be configured to exchange heat between a refrigerant and air from outdoor through a phase change of the refrigerant (e.g., evaporation or condensation). For example, while the refrigerant is condensed in the outdoor heat exchanger, the refrigerant may radiate heat to the outdoor air. While the refrigerant flowing in the outdoor heat exchanger evaporates, the refrigerant may absorb heat from the outdoor air.

The indoor unit is installed indoors. For example, according to the arrangement method of the indoor unit, the air conditioner may be classified into a ceiling-type indoor unit, a stand-type indoor unit, a wall-type indoor unit, and the like. For example, the ceiling-type indoor unit may be classified into a 4-way type indoor unit, a 1-way type indoor unit, a duct type indoor unit and the like according to a method of discharging air.

Similarly, the indoor heat exchanger may be configured to exchange heat between a refrigerant and outdoor air through a phase change of the refrigerant (e.g., evaporation or condensation). For example, while the refrigerant evaporates in the indoor unit, the refrigerant may absorb heat from the indoor air. The indoor space may be cooled by blowing the indoor air cooled through the cooled indoor heat exchanger. While the refrigerant is condensed in the indoor heat exchanger, the refrigerant may radiate heat to the indoor air. The indoor space may be heated by blowing the indoor air heated through the high-temperature indoor heat exchanger.

In other words, the air conditioner may perform a cooling or heating function by a phase change process of a refrigerant circulated between the outdoor heat exchanger and the indoor heat exchanger. To circulate the refrigerant, the air conditioner may include a compressor to compress the refrigerant. The compressor may draw refrigerant gas through an inlet and compress the refrigerant gas. The compressor may discharge high-temperature and high-pressure refrigerant gas through an outlet. The compressor may be disposed inside the outdoor unit.

Through the refrigerant pipe, the refrigerant may be circulated sequentially through the compressor, the outdoor heat exchanger, the expansion device, and the indoor heat exchanger or sequentially circulated through the compressor, the indoor heat exchanger, the expansion device, and the outdoor heat exchanger.

For example, in the air conditioner, when a single outdoor unit and a single indoor unit are directly connected through a refrigerant pipe, the refrigerant may be circulated between the single outdoor unit and the single indoor unit through the refrigerant pipe.

For example, in the air conditioner, when a single outdoor unit is connected to two or more indoor units through a refrigerant pipe, the refrigerant may flow from the single outdoor unit to the plurality of indoor units through branched refrigerant pipes. Refrigerant discharged from the plurality of indoor units may be combined and circulated to the outdoor unit. For example, each of the plurality of indoor units may be directly connected in parallel to the single outdoor unit through a separate refrigerant pipe.

Each of the plurality of indoor units may be operated independently according to an operation mode set by a user. In other words, some of the plurality of indoor units may be operated in a cooling mode while others of the plurality of indoor units are operated in a heating mode. At that time, the refrigerant may be selectively introduced into each indoor unit in a high-pressure state or a low-pressure state, discharged, and circulated to the outdoor unit along a circulation path that is designated through a flow path switching valve to be described later.

For example, in the air conditioner, when two or more outdoor units and two or more indoor units are connected by the plurality of refrigerant pipes, refrigerant discharged from the plurality of outdoor units may be combined and flow through one refrigerant pipe, and then diverged again at a certain point and introduced into the plurality of indoor units.

All of the plurality of outdoor units may be driven or at least some of the plurality of outdoor units may not be driven, in accordance with to a driving load corresponding to an operating amount of the plurality of indoor units. At that time, the refrigerant may be provided through a flow path switching valve to be introduced into and circulated to an outdoor unit that is selectively driven. The air conditioner may include the expansion device to reduce the pressure of the refrigerant flowing into the heat exchanger. For example, the expansion device may be disposed inside the indoor unit or inside the outdoor unit, or disposed both inside the indoor unit and the outdoor unit.

The expansion device may reduce the temperature and pressure of the refrigerant by using a throttling effect. The expansion device may include an orifice configured to reduce a cross-sectional area of a flow path. A temperature and pressure of the refrigerant passing through the orifice may be lowered.

For example, the expansion device may be implemented as an electronic expansion valve configured to adjust an opening ratio (a ratio of a cross-sectional area of a flow path of a valve in a partially opened state to a cross-sectional area of the flow path of the valve in a fully opened state). According to the opening ratio of the electronic expansion valve, the amount of refrigerant passing through the expansion device may be adjusted.

The air conditioner may further include a flow path switching valve disposed on the refrigerant circulation path. The flow path switching valve may include a 4-way valve. The flow path switching valve may determine a refrigerant circulation path depending on an operation mode of the indoor unit (e.g., cooling operation or heating operation). The flow path switching valve may be connected to the outlet of the compressor.

The air conditioner may include an accumulator. The accumulator may be connected to the inlet of the compressor. A low-temperature and low-pressure refrigerant, which is evaporated in the indoor heat exchanger or the outdoor heat exchanger, may flow into the accumulator.

When a refrigerant mixture of refrigerant liquid and refrigerant gas is introduced, the accumulator may separate the refrigerant liquid from the refrigerant gas, and supply the refrigerant gas separated from the refrigerant liquid to the compressor.

An outdoor fan may be installed near the outdoor heat exchanger. The outdoor fan may blow outdoor air to the outdoor heat exchanger to promote heat exchange between the refrigerant and the outdoor air.

The outdoor unit of the air conditioner may include at least one sensor. For example, the outdoor unit sensor may be provided as an environmental sensor. The outdoor unit sensor may be disposed at a given position of the inside or the outside of the outdoor unit. For example, the outdoor unit sensor may include a temperature sensor configured to detect an air temperature around the outdoor unit, an air humidity sensor configured to detect air humidity around the outdoor unit, or a refrigerant temperature sensor configured to detect a refrigerant temperature in a refrigerant pipe passing through the outdoor unit, or a refrigerant pressure sensor configured to detect a refrigerant pressure in a refrigerant pipe passing through the outdoor unit.

The outdoor unit of the air conditioner may include an outdoor unit communication circuitry. The outdoor unit communication circuitry may be configured to receive a control signal from an indoor unit controller of the air conditioner, which will be described later. Based on a control signal received through the outdoor unit communication circuitry, the outdoor unit may control the operation of the compressor, the outdoor heat exchanger, the expansion device, the flow path switching valve, the accumulator, or the outdoor fan. The outdoor unit may transmit a measurement value detected by the outdoor unit sensor to the indoor unit controller through the outdoor unit communication circuitry.

The indoor unit of the air conditioner may include a housing, a blower configured to circulate air inside or outside the housing, and the indoor heat exchanger configured to exchange heat with air introduced into the housing.

The housing may include an inlet. Indoor air may flow into the housing through the inlet.

The indoor unit of the air conditioner may include a filter configured to filter out foreign substance in air that is introduced into the inside of the housing through the inlet.

The housing may include an outlet. Air flowing inside the housing may be discharged to the outside of the housing through the outlet.

An airflow guide configured to guide a direction of air discharged through the outlet may be provided in the housing of the indoor unit. For example, the airflow guide may include a blade positioned in the outlet. For example, the airflow guide may include an auxiliary fan for regulating an exhaust airflow, but is not limited thereto. Alternatively, the airflow guide may be omitted.

The indoor heat exchanger and the blower arranged on a flow path connecting the inlet and the outlet may be disposed inside the housing of the indoor unit.

The blower may include an indoor fan and a fan motor. For example, the indoor fan may include an axial fan, a mixed-flow fan, a cross-flow fan and a centrifugal fan.

The indoor heat exchanger may be arranged between the blower and the outlet or between the inlet and the blower. The indoor heat exchanger may absorb heat from air introduced through the inlet or transfer heat to air introduced through the inlet. The indoor heat exchanger may include a heat exchange tube through which refrigerant flows, and heat exchange fins in contact with the heat exchange tube to increase a heat transfer area.

The indoor unit of the air conditioner may include a drain tray disposed below the indoor heat exchanger to collect condensed water generated in the indoor heat exchanger. The condensed water contained in the drain tray may be drained to the outside through a drain hose. The drain tray may be arranged to support the indoor heat exchanger.

The indoor unit of the air conditioner may include an input interface. The input interface may include any type of user input means including a button, a switch, a touch screen and/or a touch pad. A user may directly input setting data (e.g., desired indoor temperature, cooling/ heating/ dehumidifying/air cleaning operation mode setting, outlet selection setting, and/or air volume setting) through the input interface.

The input interface may be connected to an external input device. For example, the input interface may be electrically connected to a wired remote controller. The wired remote controller may be installed at a specific location (e.g., a part of a wall) in an indoor space. A user may input setting data related to the operation of the air conditioner by manipulating the wired remote controller. An electrical signal corresponding to the setting data obtained by the wired remote controller may be transmitted to the input interface. In addition, the input interface may include an infrared sensor. A user may remotely input the setting data for operating the air conditioner by using a wireless remote controller. The setting data received by the wireless remote controller may be transmitted to the input interface as an infrared signal.

In addition, the input interface may include a microphone. A user's voice command may be obtained through the microphone. The microphone may convert a user's voice command into an electrical signal and transmit the converted electrical signal to the indoor unit controller. The indoor unit controller may control components of the air conditioner to perform a function corresponding to the user's voice command. The setting data obtained through the input interface (e.g., desired indoor temperature, cooling/ heating/ dehumidifying/air cleaning operation mode setting, outlet selection setting, and/or air volume setting) may be transmitted to the indoor unit controller to be described later. For example, the setting data obtained through the input interface may be transmitted to the outside, that is, to the outdoor unit or a server through an indoor unit communication circuitry to be described later.

The indoor unit of the air conditioner may include a power module. The power module may be connected to an external power source to supply power to components of the indoor unit.

The indoor unit of the air conditioner may include an indoor unit sensor. The indoor unit sensor may be an environmental sensor disposed inside or outside the housing. For example, the indoor unit sensor may include one or more temperature sensors and/or humidity sensors disposed in a predetermined space inside or outside the housing of the indoor unit. For example, the indoor unit sensor may include a refrigerant temperature sensor configured to detect a refrigerant temperature of a refrigerant pipe passing through the indoor unit. For example, the indoor unit sensor may include a refrigerant temperature sensor each configured to detect a temperature of an entrance, a middle portion and/or an exit of the refrigerant pipe passing through the indoor heat exchanger.

For example, each environmental information detected by the indoor unit sensor may be transmitted to the indoor unit controller to be described later or transmitted to the outside through the indoor unit communication circuitry to be described later.

The indoor unit of the air conditioner may include the indoor unit communication circuitry. The indoor unit communication circuitry may include at least one of a short-range wireless communication module and a long-range wireless communication module. The indoor unit communication circuitry may include at least one antenna for wirelessly communicating with other devices. The outdoor unit may include the outdoor unit communication circuitry. The outdoor unit communication circuitry may also include at least one of a short-range wireless communication module and a long-range wireless communication module.

The short-range wireless communication module may include a Bluetooth communication module, a Bluetooth Low Energy (BLE) communication module, a near field communication module, a wireless local area network (WLAN) (wireless fidelity (Wi-Fi)) communication module, and a Zigbee communication module, an infrared data association (IrDA) communication module, a Wi-Fi Direct (WFD) communication module, an ultrawideband (UWB) communication module, an Ant+ communication module, a microwave (uWave) communication module, etc., but is not limited thereto.

The long-range wireless communication module may include a communication module that performs various types of long-range wireless communication, and may include a mobile communication circuitry. The mobile communication circuitry transmits and receives radio signals with at least one of a base station, an external terminal, and a server in a mobile communication network.

The indoor unit communication circuitry may communicate with an external device such as a server, a mobile device and other home appliances through an access point (AP). The AP may connect a local area network (LAN), to which an air conditioner or a user device is connected, to a wide area network (WAN) to which a server is connected. The air conditioner or the user device may be connected to the server through the WAN. The indoor unit of the air conditioner may include the indoor unit controller configured to control components of the indoor unit including the blower. The outdoor unit of the air conditioner may include an outdoor unit controller configured to control components of the outdoor unit including the compressor. The indoor unit controller may communicate with the outdoor unit controller through the indoor unit communication circuitry and the outdoor unit communication circuitry. The outdoor unit communication circuitry may transmit a control signal generated by the outdoor unit controller to the indoor unit communication circuitry, or transmit a control signal, which is transmitted from the indoor unit communication circuitry, to the outdoor unit controller. In other words, the outdoor unit and the indoor unit may perform bi-directional communication. The outdoor unit and the indoor unit may transmit and receive various signals generated during the operation of the air conditioner.

The outdoor unit controller may be electrically connected to components of the outdoor unit and may control the operation of each component. For example, the outdoor unit controller may adjust a frequency of the compressor and control the flow path switching valve to change a circulation direction of the refrigerant. The outdoor unit controller may adjust a rotational speed of the outdoor fan. In addition, the outdoor unit controller may generate a control signal to adjust the opening degree of the expansion valve. Under the control of the outdoor unit controller, the refrigerant may be circulated along the refrigerant circulation circuit including the compressor, the flow path switching valve, the outdoor heat exchanger, the expansion valve, and the indoor heat exchanger.

Various temperature sensors included in the outdoor unit and the indoor unit may transmit electrical signals corresponding to detected temperatures to the outdoor unit controller and/or the indoor unit controller. For example, the humidity sensors included in the outdoor unit and the indoor unit may respectively transmit electrical signals corresponding to the detected humidity to the outdoor unit controller and/or the indoor unit controller.

The indoor unit controller may obtain a user input from a user device including a mobile device through the indoor unit communication circuitry, or directly obtain a user input through the input interface or the remote controller. The indoor unit controller may control components of the indoor unit including the blower in response to the received user input. The indoor unit controller may transmit information related to the received user input to the outdoor unit controller of the outdoor unit.

The outdoor unit controller may control components of the outdoor unit including the compressor based on the information related to the user input received from the indoor unit. For example, when a control signal corresponding to a user input for selecting an operation mode such as a cooling operation, a heating operation, a fan operation, a defrosting operation, or a dehumidifying operation is received from the indoor unit, the outdoor unit controller may control components of the outdoor unit to perform an operation of the air conditioner corresponding to the selected operation mode.

The outdoor unit controller and the indoor unit controller may include a processor and memory, respectively. The indoor unit controller may include at least one a first processor and at least one a first memory, and the outdoor unit controller may include at least one a second processor and at least one a second memory.

The memory may record/store various types of information necessary for the operation of the air conditioner. The memory may store instructions, applications, data and/or programs necessary for the operation of the air conditioner. For example, the memory may store various programs for the cooling operation, the heating operation, the dehumidifying operation, and/or the defrosting operation of the air conditioner. The memory may include volatile memory, such as a static random access memory (S-RAM) and a dynamic random access memory (D-RAM) for temporarily storing data. In addition, the memory may include a non-volatile memory, such as a read only memory (ROM), an erasable programmable read only memory (EPROM), and an electrically erasable programmable read only memory (EEPROM) for long-term storage of data.

The processor may generate a control signal for controlling an operation of the air conditioner based on instructions, applications, data, and/or programs stored in the memory. The processor may be hardware and may include a logic circuit and an arithmetic circuit. The processor may process data according to a program and/or instructions provided from the memory, and may generate a control signal according to a processing result. The memory and the processor may be implemented as one control circuit or as a plurality of circuits.

The indoor unit of the air conditioner may include an output interface. The output interface may be electrically connected to the indoor unit controller, and output information related to the operation of the air conditioner under the control of the indoor unit controller. For example, the output interface may output information, such as an operation mode selected by a user input, a wind direction, a wind volume, and a temperature. In addition, the output interface may output sensing information obtained from the indoor unit sensor or the outdoor unit sensor, and output warning/error messages.

The output interface may include a display and a speaker. The speaker may be a sound device and configured to output various sounds. The display may display information, which is input by a user or provided to a user, as various graphic elements. For example, operational information of the air conditioner may be displayed as at least one of an image and text. In addition, the display may include an indicator that provides specific information. The display may include a liquid crystal display (LCD) panel, a light emitting diode (LED) panel, an organic light emitting diode (OLED) panel, a micro-LED panel, and/or a plurality of LEDs.

It should be appreciated that the blocks in each flowchart and combinations of the flowcharts may be performed by one or more computer programs which include instructions. The entirety of the one or more computer programs may be stored in a single memory device or the one or more computer programs may be divided with different portions stored in different multiple memory devices.

Any of the functions or operations described herein can be processed by one processor or a combination of processors. The one processor or the combination of processors is circuitry performing processing and includes circuitry like an application processor (AP, e.g. a central processing unit (CPU)), a communication processor (CP, e.g., a modem), a graphics processing unit (GPU), a neural processing unit (NPU) (e.g., an artificial intelligence (AI) chip), a Wi-Fi chip, a Bluetooth^{®} chip, a global positioning system (GPS) chip, a near field communication (NFC) chip, connectivity chips, a sensor controller, a touch controller, a finger-print sensor controller, a display driver integrated circuit (IC), an audio CODEC chip, a universal serial bus (USB) controller, a camera controller, an image processing IC, a microprocessor unit (MPU), a system on chip (SoC), an IC, or the like.

Hereinafter, an air conditioner according to various embodiments of the disclosure will be described in detail with reference to the accompanying drawings. For convenience of description, an air purifier is described as an example of an air conditioner, but the disclosure is not limited to the air purifier, and is applicable to a variety of home appliances including an indoor unit having a heat exchanger.

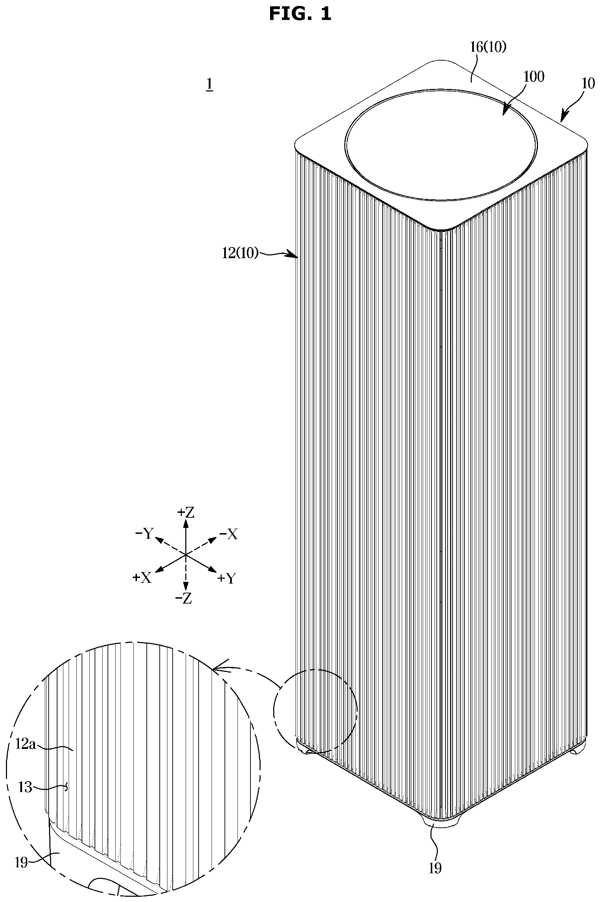

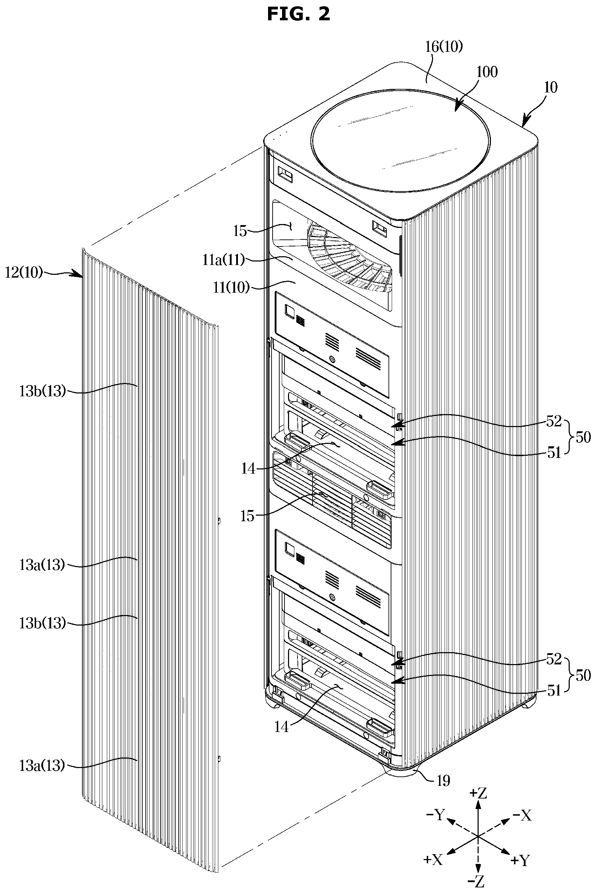

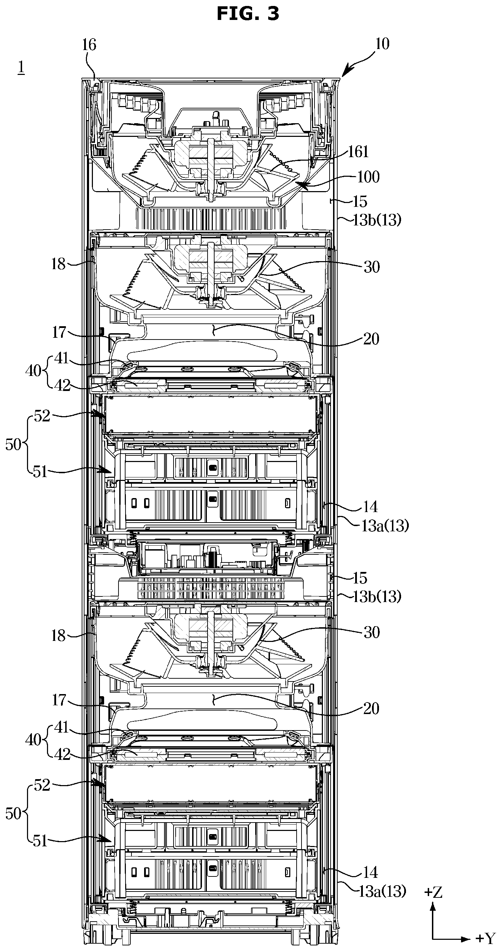

FIG. 1 illustrates an air conditioner according to an embodiment of the disclosure. FIG. 2 is an exploded view illustrating a portion of blower panels of an air conditioner according to an embodiment of the disclosure. FIG. 3 is a cross-sectional view of an air conditioner according to an embodiment of the disclosure.

Referring to FIGS. 1, 2, and 3, the air conditioner 1 may include a housing 10. The housing 10 may form an exterior of the air conditioner 1.

The housing 10 may include a frame body 11 and a blower panel 12 provided on the outside of the frame body 11. The frame body 11 may support various components of the air conditioner 1. The frame body 11 may accommodate various components of the air conditioner 1. At least a portion of the frame body 11 may be covered by the blower panel 12.

The blower panel 12 may be detachably mounted to the frame body 11. For example, the blower panel 12 may include a first blower panel forming the front of the air conditioner 1, a second blower panel forming the rear of the air conditioner 1, a third blower panel forming the right side of the air conditioner, and a fourth blower panel forming the left side of the air conditioner 1. The first blower panel may be referred to as a front panel. The second blower panel may be referred to as a rear panel. The third blower panel may be referred to as a right panel. The fourth blower panel may be referred to as a left panel.

The first blower panel, the second blower panel, the third blower panel, and the fourth blower panel may be provided as separate components. However, at least a portion of the first blower panel, the second blower panel, the third blower panel, and the fourth blower panel may be formed integrally. At least a portion of the first blower panel, the second blower panel, the third blower panel, and the fourth blower panel may be detachable from the frame body 11.

The blower panel 12 may include a panel portion 12a. The panel portion 12a may include a plurality of ribs. The plurality of ribs may extend in one direction. For example, the plurality of ribs may extend in a vertical direction. However, the disclosure is not limited thereto.

The panel portion 12a may be formed over the entire area of the blower panel 12. For example, the panel portion 12a may be provided in a uniform pattern over the entire area of the blower panel 12. Accordingly, the degree of freedom in the design of the blower panel 12 may be increased, thereby improving aesthetics.

The housing 10 may include a blower opening 13. For example, the blower opening 13 may be formed on the blower panel 12. The blower opening 13 may extend in a vertical direction. The blower opening 13 may be formed in multiple numbers. For example, a plurality of blower openings 13 may be arranged in a direction perpendicular to the vertical direction (Z direction). For example, the plurality of blower openings 13 may be arranged along the left-right direction (Y direction) or along the front-back direction (X direction).

The blower opening 13 may be formed corresponding to the panel portion 12a. For example, the blower openings 13 may be openings formed between the plurality of ribs of the panel portion 12a. Air outside the housing 10 may be introduced into the housing 10 or discharged from the housing 10 through the blower openings 13. The blower opening 13 may include a plurality of openings.

The housing 10 may include an inlet portion 13a and an outlet portion 13b. The inlet portion 13a may be provided to allow air from the outside of the housing 10 to be introduced into the housing 10. The outlet portion 13b may be provided to allow air from the inside of the housing 10 to be discharged to the outside of the housing 10. The inlet portion 13a and the outlet portion 13b may be formed in the blower panel 12. The blower opening 13 may include the inlet portion 13a and the outlet portion 13b. The inlet portion 13a may be provided as one part of the blower opening 13, and the outlet portion 13b may be provided as another part of the blower opening 13. One part of the blower opening 13 may be the inlet portion 13a, and another part of the blower opening 13 may be the outlet portion 13b.

The housing 10 may include an inlet opening 14 and an outlet opening 15. The inlet opening 14 and the outlet opening 15 may be formed in the frame body 11. The inlet opening 14 may be provided to correspond to the inlet portion 13a of the blower opening 13. The outlet opening 15 may be provided to correspond to the outlet portion 13b of the blower opening 13.

In the air conditioner 1 according to the disclosure, air may be introduced into the housing 10 through the inlet portion 13a and the inlet opening 14, and purified air may be discharged to the outside of the housing 10 through the outlet opening 15 and the outlet portion 13b.

For example, the inlet portion 13a may include a first inlet portion and a second inlet portion spaced apart from the first inlet portion, and the inlet opening 14 may include a first inlet opening corresponding to the first inlet portion and a second inlet opening corresponding to the second inlet portion. The first inlet portion and the second inlet portion may be arranged in a vertical direction, and correspondingly, the first inlet opening and the second inlet opening may be arranged in a vertical direction.

For example, the outlet portion 13b may include a first outlet portion and a second outlet portion spaced apart from the first outlet portion, and the outlet opening 15 may include a first outlet opening corresponding to the first outlet portion and a second outlet opening corresponding to the second outlet portion. The first outlet portion and the second outlet portion may be arranged in a vertical direction, and correspondingly, the first outlet opening and the second outlet opening may be arranged in a vertical direction.

The inlet portion 13a and the outlet portion 13b may be formed in each of the first blower panel, the second blower panel, the third blower panel, and the fourth blower panel. Correspondingly, the first inlet opening 14 and the second outlet opening 15 may be formed in each of the front, the rear, the right side, and the left side of the frame body 11.

For example, air outside the housing 10 may flow into the housing 10 from four directions of the housing 10 through the inlet portion 13a and the inlet opening 14. For example, air outside the housing 10 may flow into the housing 10 from all directions through the inlet portion 13a and the inlet opening 14.

In addition, for example, air inside the housing 10 may flow from the housing 10 toward the outside of the housing 10 (in four directions of the housing 10) through the outlet portion 13b and the outlet opening 15. For example, air inside the housing 10 may flow toward the outside of the housing 10 (to all directions) through the outlet portion 13b and the outlet opening 15.

Because air is introduced and/or discharged from/to all directions, air circulation inside the housing 10 may be smoothly performed. The air conditioner 1 may achieve a high dust collecting efficiency.

The housing 10 may include an upper frame 16. The upper frame 16 may be provided at an upper end of the housing 10. The upper frame 16 may be disposed on top of the frame body 11.

A user interface may be provided on the upper frame 16. For example, the user interface may include an operation portion. The user interface may receive input from a user or output operation information of the air conditioner 1 to the user.

The housing 10 may include supports 19. The supports 19 may be disposed at a lower end of the housing 10 to support components of the air conditioner 1 and the housing 10.

The air conditioner 1 may include a blower 30. The blower 30 may generate blowing force. The blower 30 may move air. The blower 30 may force air to flow. The blower 30 may rotate to create an air flow flowing inside the housing 10. The blower 30 may cause air to be drawn in through the inlet portion 13a and the inlet opening 14 and to be discharged through the outlet portion 13b and the outlet opening 15. For example, the blower 30 may move air upward. However, the disclosure is not limited thereto, and in a case where the inlet portion 13a is disposed above the outlet portion 13b, the blower 30 may move air downward.

The blower 30 may be disposed inside the housing 10. The blower 30 may be located downstream of the inlet portion 13a. The blower 30 may be located upstream of the outlet portion 13b. The blower 30 may be positioned between the inlet portion 13a and the outlet portion 13b.

The air conditioner 1 may include a plurality of blowers 30. The plurality of blowers 30 may be arranged along an approximately vertical direction (Z direction). The plurality of blowers 30 may be spaced apart from each other along an approximately vertical direction (Z direction). For example, the air conditioner 1 may include a first blower and a second blower. However, the number of blowers 30 is not limited.

A flow path 20 may be formed in the housing 10. The flow path 20 may extend from the inlet portion 13a to the outlet portion 13b. Air blown by the blower 30 may flow along the flow path 20.

Air may pass through the housing 10 along an airflow direction. The airflow direction may be a direction from upstream to downstream of the flow path 20 formed inside the housing 10. For example, the airflow direction in the housing 10 may include the vertical direction (Z direction). The airflow direction may be a direction in which air introduced into the housing 10 through the inlet portion 13a and the inlet opening 14 flows toward the outlet opening 15 and the outlet portion 13b. For example, the airflow direction may be a direction in which air introduced into the housing 10 through the inlet portion 13a and the inlet opening 14 passes through a dust collector 50, a deodorizing device 40, and the blower 30. For example, air introduced into the front, rear, left, and right sides of the housing 10 by the blower 30 may flow upward and then be discharged again to the front, rear, left, and right sides of the housing 10. However, the direction of air flow is not limited to the above-described example.

The air conditioner 1 may include an air guide 17. Air flowing into the housing 10 through the inlet portion 13a and the inlet opening 14 may be guided toward the blower 30 through the air guide 17. A portion of the flow path 20 may be formed in the air guide 17. The air guide 17 may guide air in the housing 10 and/or air in the flow path 20 to the blower 30. Air that has passed through the inside of the air guide 17 may flow into a blower case 18 and the blower 30.

The air conditioner 1 may include the blower case 18. The blower 30 may be disposed in the blower case 18. A portion of the flow path 20 may be formed in the blower case 18. The blower case 18 may guide the flow of air flowing inside the housing 10. The blower case 18 may be in communication with the air guide 17.

The air conditioner 1 may include the dust collector 50. The dust collector 50 may filter air. The dust collector 50 may collect aerosols in the air. For example, the dust collector 50 may include a first assembly 51 to charge aerosols in the air, and a second assembly 52 to collect the aerosols charged by the first assembly 51.

The dust collector 50 may be disposed in the housing 10. The dust collector 50 may be positioned to allow air introduced through the inlet portion 13a and the inlet opening 14 to pass therethrough. The dust collector 50 may be positioned to allow air to pass therethrough before being discharged through the outlet opening 15 and the outlet portion 13b. The dust collector 50 may be positioned between the inlet portion 13a and the outlet portion 13b. The dust collector 50 may be positioned between the inlet opening 14 and the outlet opening 15. The dust collector 50 may filter air introduced into the housing 10 through the inlet portion 13a by the blower 30. The filtered air may be discharged to the outside of the housing 10 through the outlet portion 13b.

For example, the dust collector 50 may be disposed below the blower 30. For example, the blower 30 may be positioned above the dust collector 50. For example, the dust collector 50 and the blower 30 may be arranged to allow the deodorizing device 40 to be disposed therebetween. However, the positions of the deodorizing device 40, the dust collector 50, and the blower 30 are not limited to the above-described example.

The air conditioner 1 may include a plurality of dust collectors 50. The plurality of dust collectors 50 may be arranged along an approximately vertical direction (Z direction). The plurality of dust collectors 50 may be spaced apart from each other along an approximately vertical direction (Z direction). For example, the air conditioner 1 may include a first dust collector and a second dust collector. However, the number of dust collectors 50 is not limited.

The air conditioner 1 may include the deodorizing device 40. The deodorizing device 40 may deodorize air. The deodorizing device 40 may remove odors from the air. The deodorizing device 40 may sterilize air. For example, the deodorizing device 40 may sterilize air by decomposing organic substances in the air. Odor of air flowing into the housing 10 may be removed while passing through the deodorizing device 40.

The deodorizing device 40 may include a light source device 41 and a photocatalytic filter 42. The photocatalytic filter 42 may react with light emitted from the light source of the light source device 41 to generate a reactant, and the reactant may decompose odor substances to deodorize the air.

The deodorizing device 40 may be disposed in the housing 10. The deodorizing device 40 may be positioned to allow air introduced through the inlet portion 13a and the inlet opening 14 to pass therethrough. The deodorizing device 40 may be positioned to allow air to pass therethrough before being discharged through the outlet opening 15 and the outlet portion 13b. The deodorizing device 40 may be positioned between the inlet portion 13a and the outlet portion 13b. The deodorizing device 40 may be positioned between the inlet opening 14 and the outlet opening 15.

The deodorizing device 40 may deodorize air that has passed through the dust collector 50. The deodorizing device 40 may be located downstream of the dust collector 50 in the airflow direction. The deodorizing device 40 may be positioned between the dust collector 50 and the outlet portion 13b. The deodorizing device 40 may be positioned between the dust collector 50 and the outlet opening 15. However, the disclosure is not limited thereto, and the deodorizing device 40 may also be located upstream of the dust collector 50 in the airflow direction. In this instance, the dust collector 50 may collect aerosols in the air that has passed through the deodorizing device 40.

For example, the deodorizing device 40 may be disposed above the dust collector 50. For example, the dust collector 50 may be disposed below the deodorizing device 40. For example, the deodorizing device 40 may be positioned between the dust collector 50 and the blower 30. However, the positions of the deodorizing device 40, the dust collector 50, and the blower 30 are not limited to the examples described above.

The air conditioner 1 may include a plurality of deodorizing devices 40. The plurality of deodorizing devices 40 may be arranged along an approximately vertical direction (Z direction). The plurality of deodorizing devices 40 may be spaced apart from each other along an approximately vertical direction (Z direction). For example, the air conditioner 1 may include a first deodorizing device and a second deodorizing device. However, the number of deodorizing devices 40 is not limited.

For example, the first deodorizing device may be disposed above the first dust collector. For example, the second deodorizing device may be disposed above the second dust collector. For example, the first blower may be positioned between the first dust collector and the second dust collector. For example, the second dust collector may be spaced above the first dust collector with the first blower therebetween. For example, the first blower may be positioned between the first deodorizing device and the second dust collector. For example, the second blower may be disposed above the second dust collector. For example, the second blower may be disposed above the second dust collector. For example, the second blower may be disposed above the second dust collector to move air that has passed through the second dust collector toward the outlet portion 13b. For example, the second blower may be disposed above the second deodorizing device. For example, the second blower may be disposed above the second deodorizing device to move air that has passed through the second deodorizing device toward the outlet portion 13b. However, the disclosure is not limited to the above-described examples, and the positions of the dust collector 50, the deodorizing device 40, and the blower 30 are not limited to the above-described examples.

For example, the blower 30, the deodorizing device 40, and the dust collector 50 arranged below and the components related thereto may be omitted from the air conditioner 1.

The dust collector 50 may be positioned on the flow path 20. The deodorizing device 40 may be positioned on the flow path 20. The blower 30 may be positioned on the flow path 20. For example, air flowing into the flow path 20 through the inlet portion 13a may flow to the outlet portion 13b after passing through the dust collector 50, the deodorizing device 40, and the blower 30. The air flowing to the outlet portion 13b may exit from the flow path 20.

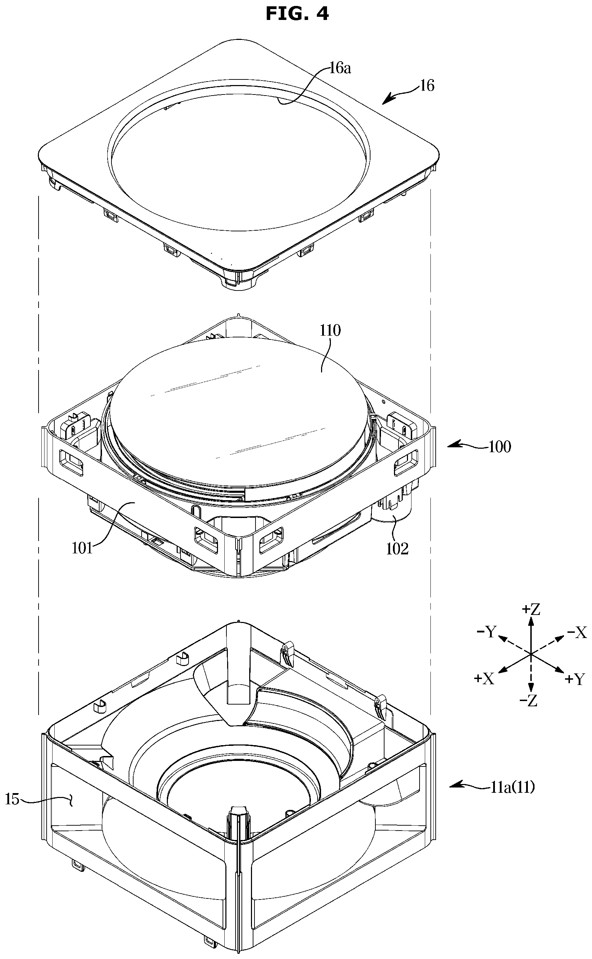

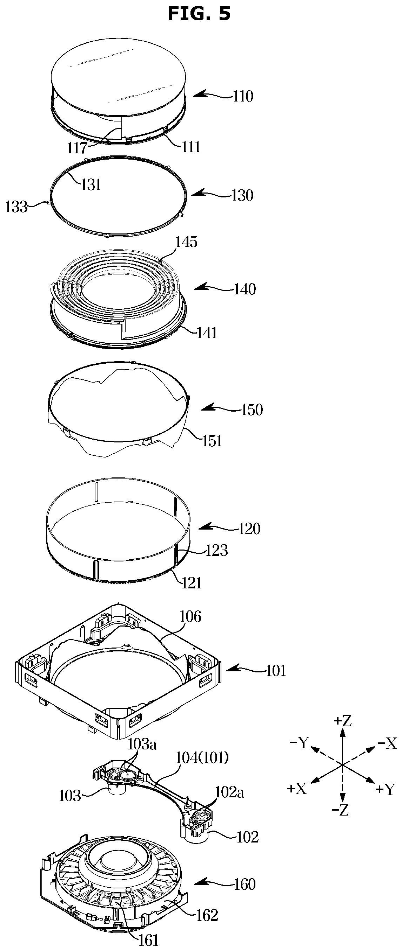

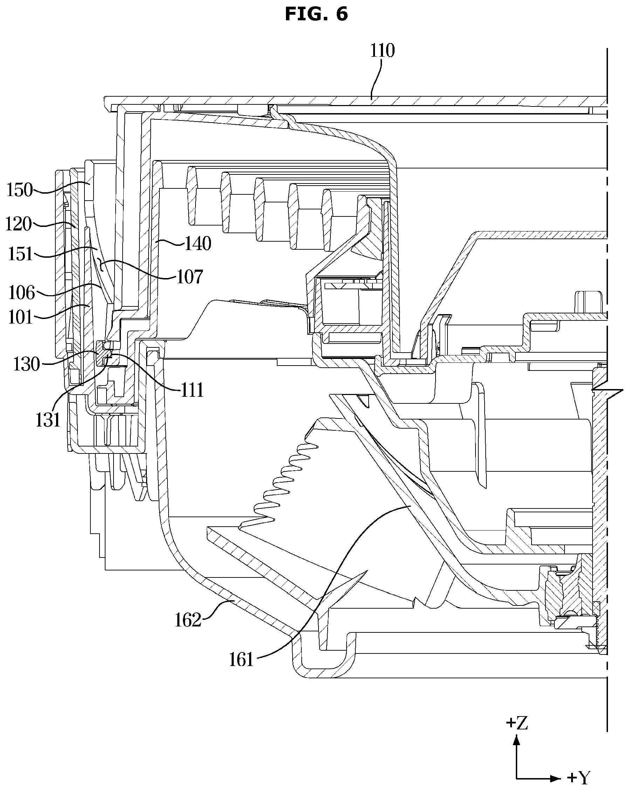

FIG. 4 is an exploded view illustrating a discharge device separated from a housing of an air conditioner according to an embodiment of the disclosure. FIG. 5 is an exploded view illustrating a discharge device according to an embodiment of the disclosure. FIG. 6 is a cross-sectional view of a portion of a discharge device according to an embodiment of the disclosure.

Referring to FIGS. 4, 5, and 6, the air conditioner 1 may include a discharge device 100. The discharge device 100 may be mounted on the housing 10. The discharge device 100 may be mounted on the frame body 11 of the housing 10. The discharge device 100 may be mounted on an upper part 11a of the frame body 11. The discharge device 100 may be positioned between the upper part 11a of the frame body 11 and the upper frame 16.

The air conditioner 1 according to an embodiment of the disclosure may include a discharge hole 16a formed on the upper frame 16. The discharge hole 16a may be formed to face a different direction from the direction in which the outlet portion 13b faces. For example, the discharge hole 16a may be formed to face upward. The discharge hole 16a may be formed at an end of a flow path formed between the blower 30 and the outlet portion 13b. Air blown by the blower 30 may be discharged to the outside of the housing 10 through the outlet portion 13b or the discharge hole 16a.

The discharge device 100 may open and close the discharge hole 16a. The discharge device 100 may guide a portion of the air blown to the outlet portion 13b by the blower 30 to the discharge hole 16a.

The discharge device 100 may include a base 101. The base 101 may be fixed to the housing 10. The base 101 may be mounted and fixed to the frame body 11. The base 101 may support various components of the discharge device 100. For example, the base 101 may include a driving source case 104 for mounting a cover lift motor 102 and a cover rotation motor 103.

The discharge device 100 may include the cover lift motor 102 mounted on the base 101. The cover lift motor 102 may provide power for moving a discharge cover 110. For example, the cover lift motor 102 may be disposed at a right rear corner of the base 101. The discharge cover 110 may move up or down according to an operation of the cover lift motor 102. The cover lift motor 102 may move the discharge cover 110 between a lower position and an upper position along a third direction. The third direction being perpendicular to the first direction and the second direction which are the rotational directions of the rotation transmission part 140.

For example, the discharge device 100 may include a moving gear 102a for transmitting the power of the cover lift motor 102 to a rotating member 120. The cover lift motor 102 may include the moving gear 102a. The cover lift motor 102 may be connected to the rotating member 120 through the moving gear 102a. For example, the moving gear 102a may include a plurality of gears.

The discharge device 100 may include the cover rotation motor 103 mounted on the base 101. The cover rotation motor 103 may provide power for rotating the discharge cover 110. For example, the cover rotation motor 103 may be disposed at a left rear corner of the base 101. The cover rotation motor 103 may include a step motor. The discharge cover 110 may rotate clockwise or counterclockwise according to an operation of the cover rotation motor 103.

For example, the discharge device 100 may include a rotating gear 103a for transmitting the power of the cover rotation motor 103 to a rotation transmission part 140. The cover rotation motor 103 may include the rotating gear 103a. The cover rotation motor 103 may be connected to the rotation transmission part 140 through the rotating gear 103a. For example, the rotating gear 103a may include a plurality of gears.

The rotation transmission part 140 may also be referred to as a discharge cover rotor, a rotation carrier, or a rotation transmitter. The rotation transmission part 140 may be referred to by various terms in addition to the above terms.

The discharge device 100 may be configured to allow the cover rotation motor 103 to be fixed to the base 101 while the discharge cover 110 moves. In addition, the discharge device 100 may be configured to allow the cover lift motor 102 to be fixed to the base 101 while the discharge cover 110 rotates. Because the cover lift motor 102 and the cover rotation motor 103 are both fixed to the base 101, the cover lift motor 102 and the cover rotation motor 103 do not move while the discharge cover 110 moves or rotates, thereby improving an operational stability of the discharge device 100.

In the discharge device 100 of the air conditioner 1 according to the disclosure, both the cover lift motor 102 and the cover rotation motor 103 are fixed to the base 101, and thus the cover lift motor 102 and the cover rotation motor 103 do not move while the discharge cover 110 moves or rotates. Accordingly, wires connected to the cover lift motor 102 and/or the cover rotation motor 103 may be prevented from moving or becoming tangled or broken and causing failure.

In the discharge device 100 of the air conditioner 1, both the cover lift motor 102 and the cover rotation motor 103 are fixed to the base 101, and thus the cover lift motor 102 and the cover rotation motor 103 do not move while the discharge cover 110 moves or rotates. Accordingly, safety may be prevented from being reduced due to the weight of the driving sources (e.g., cover lift motor 102 and cover rotation motor 103).

The discharge device 100 may include the discharge cover 110. The discharge cover 110 may open and close the discharge hole 16a. The discharge cover 110 may be movable and rotatable with respect to the base 101. For example, the discharge cover 110 may have a cylindrical shape with an open bottom.

The discharge cover 110 may include a cover opening 117 formed on a portion of an outer circumference of the discharge cover 110. The cover opening 117 may be located inside the housing 10 when the discharge cover 110 closes the discharge hole 16a. At least a portion of the cover opening 117 may be located outside the housing 10 when the discharge cover 110 opens the discharge hole 16a. For example, the cover opening 117 may be formed to allow the air discharged in an approximately vertical direction from the housing 10 through the discharge hole 16a to be directed in an approximately horizontal direction.

The discharge cover 110 may be coupled to a switching member 130. The discharge cover 110 may be rotatably coupled to the switching member 130. The discharge cover 110 may be coupled to the switching member 130 to move up and down together with the switching member 130. The discharge cover 110 may be coupled to the switching member 130 so as to be rotatable with respect to the switching member 130 and also to be movable up and down together with the switching member 130.

The discharge cover 110 may include a rotation support 111 provided along the circumference of the discharge cover 110. The rotation support 111 may be coupled to a rotation coupler 131 of the switching member 130. For example, the rotation support 111 of the discharge cover 110 may have a groove shape, and the rotation coupler 131 of the switching member 130 may have a shape that protrudes inward from an inner circumferential surface of the switching member 130.

The discharge cover 110 may be coupled to the rotation transmission part 140 so as to be rotatable together with the rotation transmission part 140. The discharge cover 110 may be coupled to the rotation transmission part 140 so as to be movable with respect to the rotation transmission part 140. For example, the discharge cover 110 may rotate clockwise or counterclockwise together with the rotation transmission part 140. The discharge cover 110 may be coupled to the rotation transmission part 140 so as to be movable up and down with respect to the rotation transmission part 140.

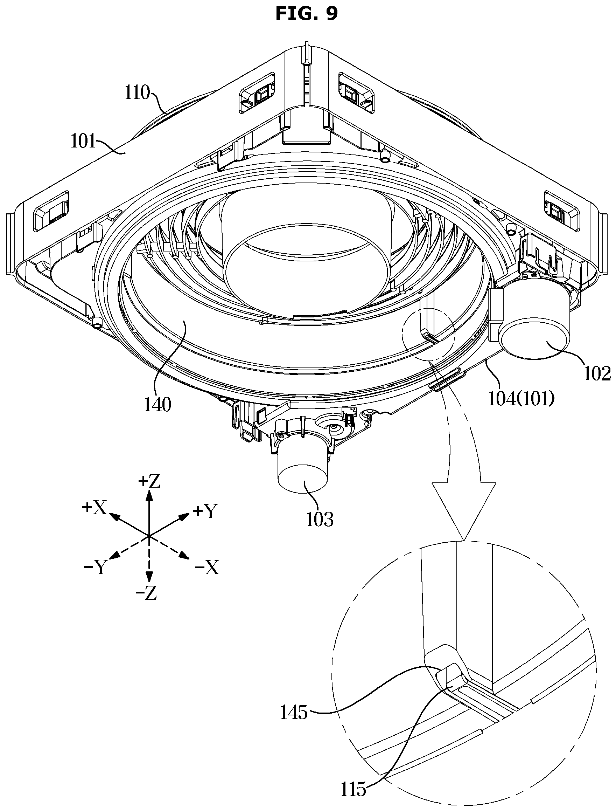

The discharge cover 110 may include a cover coupler 115 (see FIG. 9) that is movably coupled to a part coupler 145 of the rotation transmission part 140. The part coupler 145 of the rotation transmission part 140 may extend along a movement direction (e.g., up and down) of the discharge cover 110. For example, the cover coupler 115 may have a shape that protrudes inward from an inner circumferential surface of the discharge cover 110, and the part coupler 145 may have a groove shape into which the cover coupler 115 may be slidably inserted. As the part coupler 145 of the rotation transmission part 140 and the cover coupler 115 of the discharge cover 110 are coupled, the discharge cover 110 and the rotation transmission part 140 may rotate together. Separate rotation of the discharge cover 110 and the rotation transmission part 140 may be limited.

While the discharge cover 110 opens the discharge hole 16a, a portion of the air blown by the blower 30 may be discharged to the outside of the housing 10 through the outlet portion 13b, and another portion of the air blown by the blower 30 may be discharged to the outside of the housing 10 through the discharge hole 16a.

The discharge device 100 may include the movement transmission parts 120, 130 and 106 for receiving power from the cover lift motor 102 to move the discharge cover 110. For example, the movement transmission parts 120, 130 and 106 may include the rotating member 120, the switching member 130, and a movement support 106.

The discharge device 100 may include the rotating member 120. The rotating member 120 may be rotatable relative to the base 101. The rotating member 120 may be rotatably received in the base 101. The rotating member 120 may be rotatably seated on the base 101. The rotating member 120 may be connected to the cover lift motor 102. The rotating member 120 may be connected to the moving gear 102a of the cover lift motor 102.

The rotating member 120 may include a moving gear connector 121 for connecting to the cover lift motor 102. The moving gear connector 121 may be provided along at least a portion of an outer circumference of the rotating member 120. The moving gear connector 121 may have a gear shape. For example, as the moving gear 102a of the cover lift motor 102 and the moving gear connector 121 of the rotating member 120 are connected, the rotating member 120 may receive a rotational force from the cover lift motor 102 and may rotate.

The rotating member 120 may include a movement guide 123 for guiding the movement of the switching member 130. The movement guide 123 may extend in the movement direction of the discharge cover 110. For example, the movement guide 123 may extend in a vertical direction. The movement guide 123 may be coupled to a movement coupler 133 of the switching member 130. For example, the movement coupler 133 of the switching member 130 may have a protruding shape, and the movement guide 123 may have a slit shape into which the movement coupler 133 is slidably inserted. For example, the number of movement guides 123 may be provided in a single number or a plurality of numbers corresponding to the number of movement couplers 133.

The discharge device 100 may include the switching member 130. The switching member 130 may be coupled to the rotating member 120 so as to be rotatable together with the rotating member 120. The switching member 130 may be coupled to the rotating member 120 so as to be movable relative to the rotating member 120. For example, the switching member 130 may have a ring shape.

The switching member 130 may include the movement coupler 133 that is movably coupled to the movement guide 123 of the rotating member 120. For example, the movement coupler 133 may have a shape that protrudes outward from an outer circumference of the switching member 130, and the movement guide 123 may have a slit shape into which the movement coupler 133 is slidably inserted. For example, the number of movement couplers 133 may be provided in a single number or a plurality of numbers corresponding to the number of movement guides 123. As the movement coupler 133 moves up and down along the movement guide 123, the switching member 130 may move up and down with respect to the rotating member 120.

The switching member 130 may include the rotation coupler 131 that is rotatably coupled to the rotation support 111 of the discharge cover 110. The switching member 130 may be configured such that movement relative to the discharge cover 110 is limited as the rotation support 111 and the rotation coupler 131 are coupled. For example, the rotation coupler 131 may have a shape that protrudes inward from the inner circumferential surface of the switching member 130, and the rotation support 111 of the discharge cover 110 may have a groove shape formed on the outer circumference of the discharge cover 110.

The switching member 130 may be coupled to the discharge cover 110 so as to be movable together with the discharge cover 110. The switching member 130 may be coupled to the discharge cover 110 so as to be rotatable with respect to the discharge cover 110.

The discharge device 100 may include the movement support 106. The movement support 106 may guide the movement of the switching member 130 while the rotating member 120 rotates. The movement support 106 may guide the vertical movement of the switching member 130. For example, the movement support 106 may be formed integrally with the base 101.

The movement support 106 may have an inclined shape to allow the movement coupler 133 of the switching member 130 to move in a vertical direction while the switching member 130 rotates. The movement support 106 may extend along an outer edge of the switching member 130. For example, the movement support 106 may be formed such that an upwardly inclined portion and a downwardly inclined portion are repeated along the outer edge of the switching member 130. The movement support 106 may support the movement coupler 133 of the switching member 130. The movement coupler 133 of the switching member 130 may slide along the movement support 106.

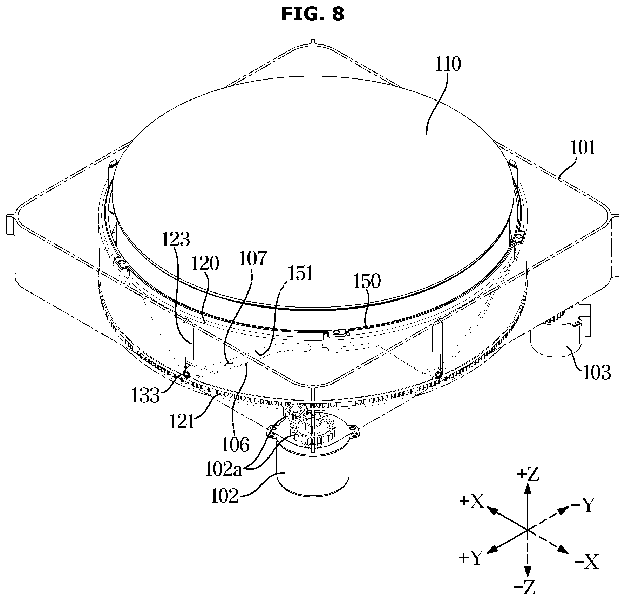

The discharge device 100 may include a movement cover 150 to form a movement rail 107 (see FIG. 8) for the movement coupler 133 of the switching member 130 together with the movement support 106. The movement cover 150 may be seated on the base 101. The movement cover 150 may be supported by at least a portion of the movement support 106 of the base 101. The movement cover 150 may include a cover inclined portion 151 corresponding to the incline portion of the movement support 106. The movement coupler 133 of the switching member 130 may move along the movement rail 107 formed by the movement support 106 and the movement cover 150. For example, the movement rail 107 may be formed in three or more portions along the edge of the switching member 130.

The discharge device 100 may include the rotation transmission part 140. The rotation transmission part 140 may receive power from the cover rotation motor 103 and rotate the discharge cover 110. The rotation transmission part 140 may also be referred to as a discharge cover rotor, a rotation carrier, or a rotation transmitter. The rotation transmission part 140 may be referred to by various terms in addition to the above terms.

The rotation transmission part 140 may include a rotating gear connector 141 to connect with the cover rotation motor 103. The rotating gear connector 141 may be provided along at least a portion of an outer circumference of the rotation transmission part 140. The rotating gear connector 141 may have a gear shape. For example, as the rotating gear 103a of the cover rotation motor 103 and the rotating gear connector 141 of the rotation transmission part 140 are connected, the rotation transmission part 140 may receive a rotational force from the cover rotation motor 103 and may rotate.

The rotation transmission part 140 may include the part coupler 145 extending along the movement direction (e.g., up and down) of the discharge cover 110. The part coupler 145 of the rotation transmission part 140 may be coupled to the cover coupler 115 of the discharge cover 110. For example, the part coupler 145 may have a groove shape, and the cover coupler 115 of the discharge cover 110 may have a protruding shape to be slidably inserted into the part coupler 145.

The discharge device 100 may be configured such that the rotation transmission part 140 rotates as the cover rotation motor 103 operates, and the discharge cover 110 rotates without movement as the rotation transmission part 140 rotates. As the part coupler 145 and the cover coupler 115 are coupled, the discharge cover 110 is limited from rotating separately from the rotation transmission part 140, but may move up and down with respect to the rotation transmission part 140.

The discharge device 100 may include a fan device 160. The fan device 160 may include a discharge fan 161 operable to discharge a portion of air blown by the blower 30 through the discharge hole 16a while the discharge cover 110 opens the discharge hole 16a. The fan device 160 may include a fan case 162 on which the discharge fan 161 is mounted.

For example, while the fan device 160 operates, the air conditioner 1 may discharge a greater amount of air through the discharge hole 16a than the amount of air discharged through the outlet portion 13b among the air blown by the blower 30. While the fan device 160 operates, the air discharged from the discharge hole 16a may reach a longer distance from the air conditioner 1. In addition, while the fan device 160 operates, a movement speed of the air discharged from the discharge hole 16a may become faster.

Referring to FIG. 6, in the discharge device 100 of the air conditioner 1, based on a rotation axis of the discharge fan 161, the discharge cover 110 and the switching member 130 may be disposed outside the rotation transmission part 140. The movement support 106 and the movement cover 150 may be disposed outside the discharge cover 110 and the switching member 130. The rotating member 120 may be disposed outside the movement support 106 and the movement cover 150.

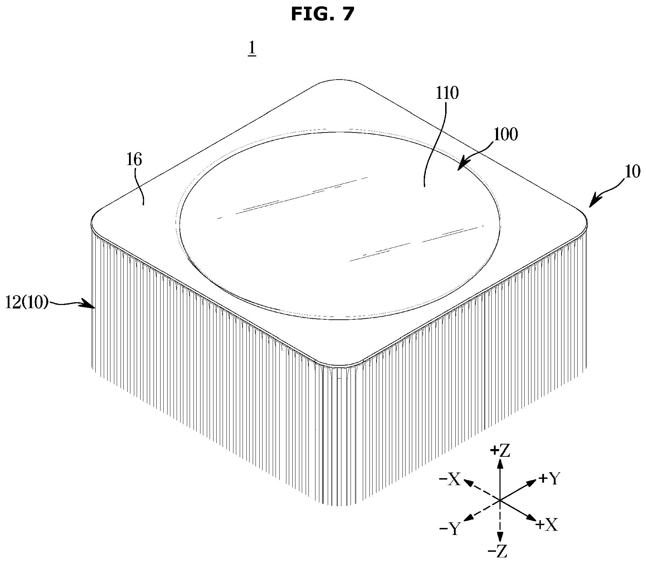

FIG. 7 illustrates a state in which a discharge device closes a discharge hole according to an embodiment of the disclosure. FIG. 8 illustrates a coupling relationship between components related to movement of a discharge cover in a state where a discharge device closes a discharge hole according to an embodiment of the disclosure. FIG. 9 illustrates lower parts of components related to movement of a discharge cover in a state where a discharge device closes a discharge hole according to an embodiment of the disclosure.

Referring to FIGS. 7, 8, and 9, a state in which the discharge device 100 closes the discharge hole 16a is described. When the discharge device 100 closes the discharge hole 16a, the movement coupler 133 of the switching member 130 may be located at a lower portion of the movement guide 123 of the rotating member 120. The movement coupler 133 of the switching member 130 may be located at a lower portion of the movement support 106. The cover coupler 115 of the discharge cover 110 may be located at a lower portion of the part coupler 145 of the rotation transmission part 140.

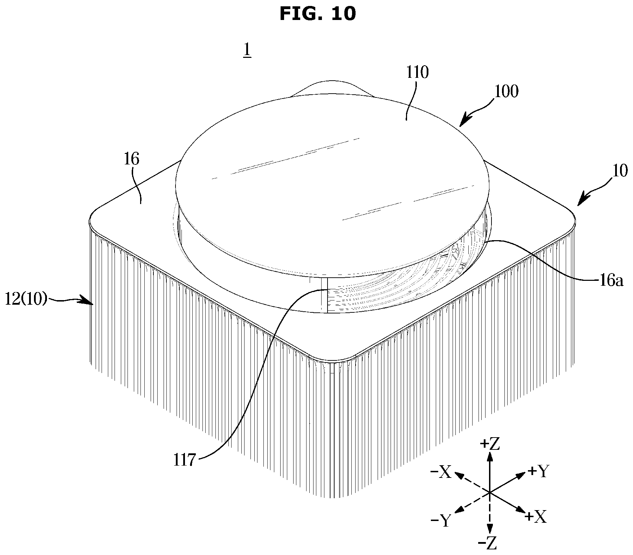

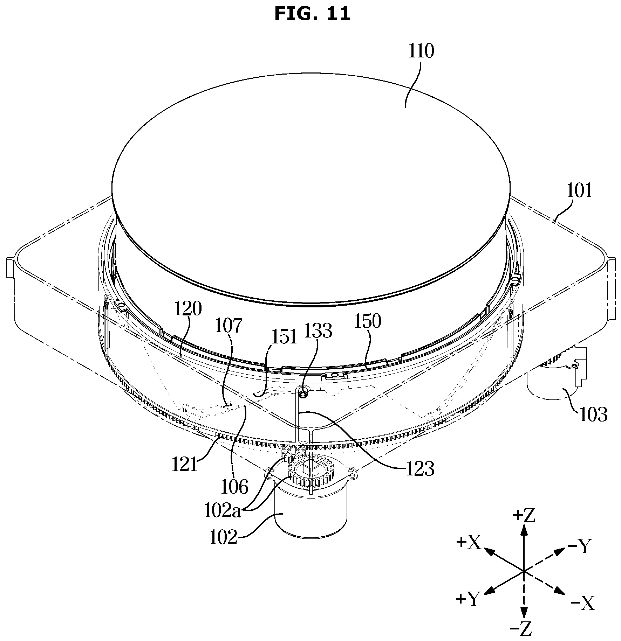

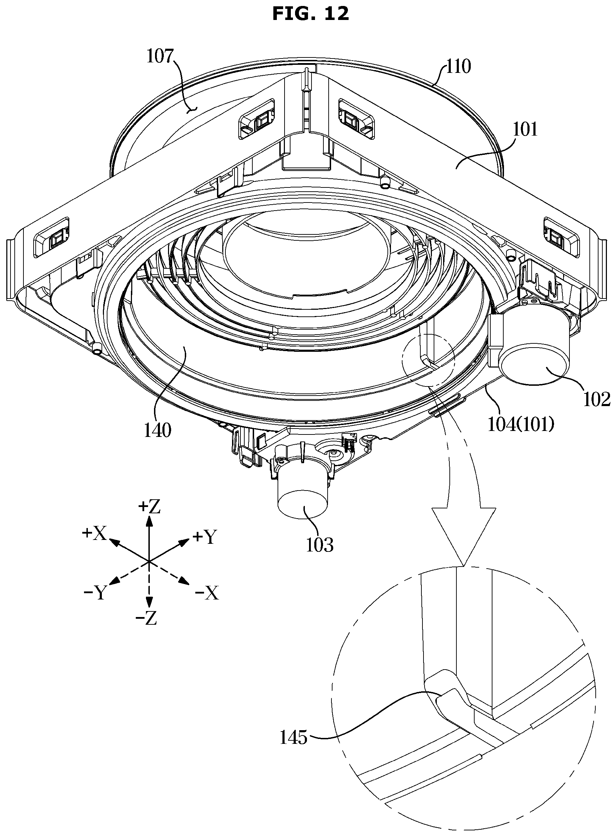

FIG. 10 illustrates a state in which a discharge device opens a discharge hole according to an embodiment of the disclosure. FIG. 11 illustrates a coupling relationship between components related to movement of a discharge cover in a state where a discharge device opens a discharge hole according to an embodiment of the disclosure. FIG. 12 illustrates lower parts of components related to movement of a discharge cover in a state where a discharge device opens a discharge hole according to an embodiment of the disclosure.

Referring to FIGS. 10, 11, and 12, a state in which the discharge device 100 opens the discharge hole 16a is described. When the discharge device 100 opens the discharge hole 16a, the movement coupler 133 of the switching member 130 may be located at an upper portion of the movement guide 123 of the rotating member 120. The movement coupler 133 of the switching member 130 may be located at an upper portion of the movement support 106. The cover coupler 115 of the discharge cover 110 may be located at an upper portion of the part coupler 145 of the rotation transmission part 140.

As the cover lift motor 102 operates, the rotating member 120 of the discharge device 100 may rotate. As the rotating member 120 rotates, the switching member 130 may rotate and move upward. As the switching member 130 rotates and moves upward, the discharge cover 110 may move upward without rotation and may open the discharge hole 16a.

As the rotating member 120 rotates, the movement coupler 133 inserted into the movement guide 123 of the rotating member 120 moves in the direction that rotates the switching member 130. While the movement coupler 133 moves in the direction that rotates the switching member 130, the movement coupler 133 moves on the movement support 106, and because the movement support 106 has an upwardly inclined shape, the movement coupler 133 moves upward. As the movement coupler 133 moves upward, the discharge cover 110 coupled to move up and down together with the switching member 130 moves upward.

While moving upward, the discharge cover 110 moves upward without rotation due to an engagement between the part coupler 145 of the rotation transmission part 140 and the cover coupler 115 of the discharge cover 110.

In order for the discharge device 100 to close the discharge hole 16a after the discharge hole 16a has been opened, the above-described process may be performed in reverse. The cover lift motor 102 generates a rotational force in the opposite direction to that used when the discharge cover 110 moves upward, and the rotating member 120 rotates. As the rotating member 120 rotates, the switching member 130 rotates and moves downward, and as the switching member 130 rotates and moves downward, the discharge cover 110 may move downward without rotation and may close the discharge hole 16a.

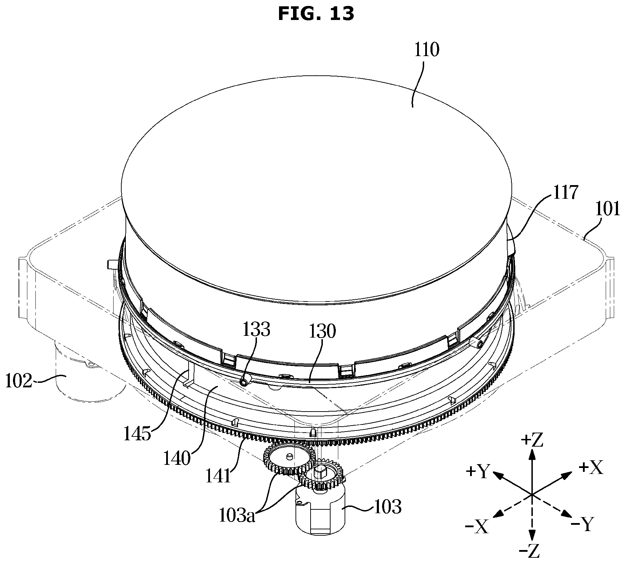

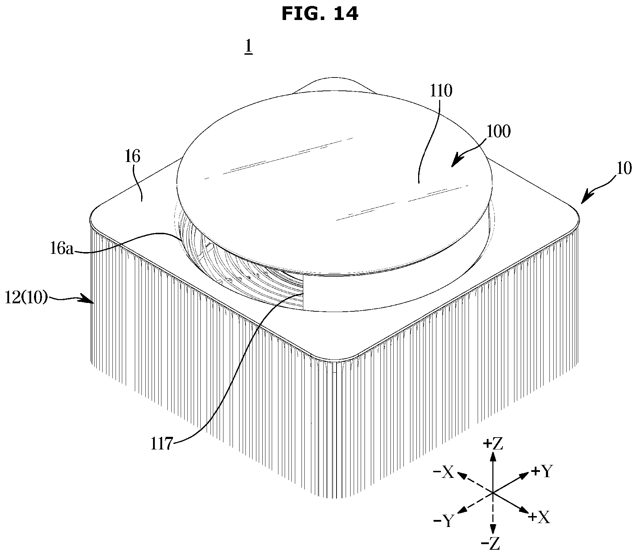

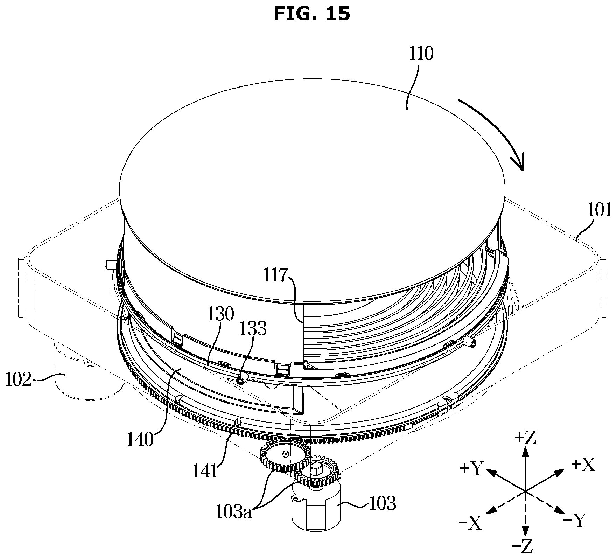

FIG. 13 illustrates a coupling relationship between components related to a rotation of a discharge cover in a state where a discharge device opens a discharge hole according to an embodiment of the disclosure. FIG. 14 illustrates a state where a discharge cover of a discharge device is rotated according to an embodiment of the disclosure. FIG. 15 illustrates a coupling relationship between components related to a rotation of a discharge cover in a state where the discharge cover of a discharge device is rotated according to an embodiment of the disclosure.

Referring to FIGS. 10, 13, 14, and 15, a rotation operation of the discharge cover 110 of the discharge device 100 is described. The discharge cover 110 of the discharge device 100 may rotate from the state shown in FIGS. 10 and 13 to the state shown in FIGS. 14 and 15.

As the cover rotation motor 103 operates, the rotation transmission part 140 rotates, and as the rotation transmission part 140 rotates, the discharge cover 110 may rotate without moving in a vertical direction due to the engagement between the part coupler 145 and the cover coupler 115. Because the switching member 130 is configured to be rotatable separately from the rotation of the discharge cover 110, the switching member 130 may not rotate despite the rotation of the discharge cover 110.

In order for the discharge cover 110 of the discharge device 100 to be rotated from the state shown in FIGS. 14 and 15 to the state shown in FIGS. 10 and 13, the above-described process may be performed in reverse. The cover rotation motor 103 may generate a rotational force in the opposite direction to the above-described direction, and thus the rotation transmission part 140 and the discharge cover 110 may rotate in the opposite direction.

As such, the air conditioner 1 according to an embodiment may guide a portion of the air blown toward the outlet portion 13b to the discharge hole 16a, and may discharge the air in various ways.

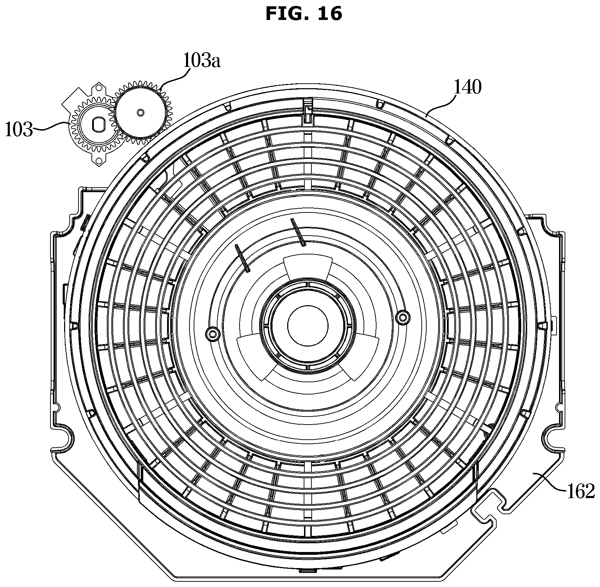

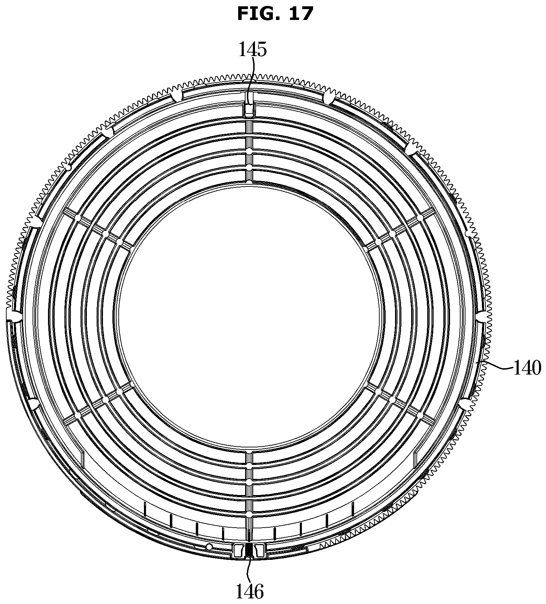

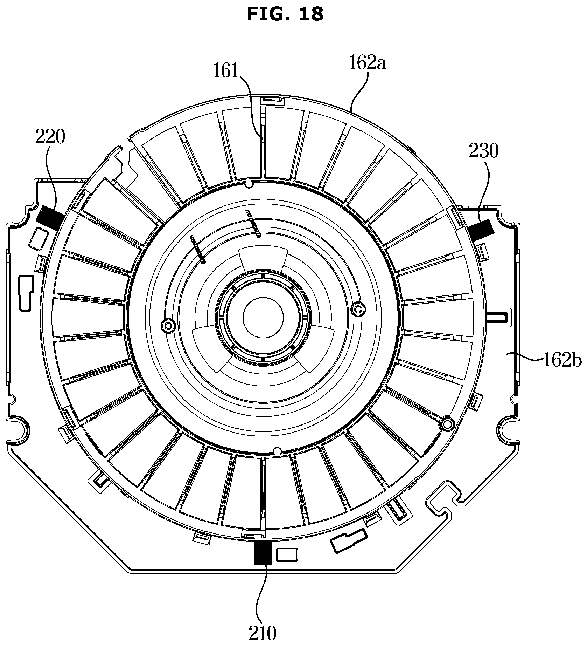

FIG. 16 is a top view of a partial configuration of a discharge device according to an embodiment of the disclosure. FIG. 17 illustrates a magnet provided in a rotation transmission part of the discharge device shown in FIG. 16 according to an embodiment of the disclosure. FIG. 18 illustrates sensors provided in a fan case of the discharge device shown in FIG. 16 according to an embodiment of the disclosure.

Referring to FIGS. 16, 17, and 18, an upper surface of the rotation transmission part 140 may have a circular shape. In addition, the upper surface of the rotation transmission part 140 may have a grille shape in which a plurality of holes are formed. As described above, the rotation transmission part 140 may be connected to the cover rotation motor 103 through the rotating gear 103a. The rotation transmission part 140 may rotate clockwise or counterclockwise depending on an operation of the cover rotation motor 103.

The discharge fan 161 may be mounted on the fan case 162. A portion of the fan case 162 may have a shape corresponding to the shape of the rotation transmission part 140. For example, the fan case 162 may include a circular structure 162a and a support 162b formed integrally with the circular structure 162a or coupled to the circular structure 162a. The support 162b may be formed to surround a portion of an outer circumference of the circular structure 162a.

A magnet 146 may be provided at a position of the rotation transmission part 140. The magnet 146 may be fixed at a position of the rotation transmission part 140. For example, the magnet 146 may be provided at a position of an outer portion (e.g., an upper edge) of the rotation transmission part 140. In addition, the magnet 146 may be located on the opposite side of the part coupler 145 based on the center of the rotation transmission part 140. The magnet 146 may identify a reference position of the rotation transmission part 140, and may also be referred to as a 'position identifier'.

The fan case 162 may be provided with a first sensor 210 and a second sensor 220 to detect the magnet 146. In addition, the fan case 162 may be provided with a third sensor 230 to detect the magnet 146. The first sensor 210, the second sensor 220, and the third sensor 230 may be provided in the fan case 162 to face the magnet 146 that moves by the rotation of the rotation transmission part 140.

The first sensor 210 may be disposed at a first position of the fan case 162. The second sensor 220 may be disposed at a second position of the fan case 162 that is spaced apart from the first position. The first position of the first sensor 210 and the second position of the second sensor 220 may have a predetermined angle with respect to the center of the fan case. The third sensor 230 may be disposed at a third position of the fan case 162, which is spaced apart from the first position and the second position.

For example, based on the center of the fan case 162 (center of the circular structure 162a), a first angle between the first position of the first sensor 210 and the second position of the second sensor 220, a second angle between the second position of the second sensor 220 and the third position of the third sensor 230, and a third angle between the third position of the third sensor 230 and the first position of the first sensor 210 may be determined variously depending on the design. For example, the first angle, the second angle, and the third angle may be the same.

The first sensor 210, the second sensor 220, and the third sensor 230 may each include a magnetic sensor that may detect a magnetic force of the magnet 146. For example, the first sensor 210, the second sensor 220, and the third sensor 230 may be tunnel magneto-resistance (TMR).

As the rotation transmission part 140 rotates clockwise or counterclockwise, the magnet 146 may also rotate clockwise or counterclockwise. When the magnet 146 moves and approaches the first sensor 210, the second sensor 220, or the third sensor 230, the first sensor 210, the second sensor 220, or the third sensor 230 may detect the magnet 146.

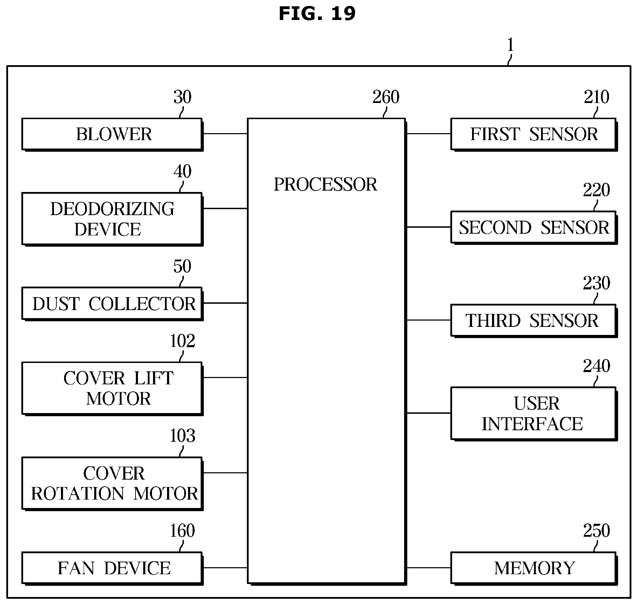

FIG. 19 is a control block diagram of an air conditioner according to an embodiment of the disclosure.

Referring to FIG. 19, the air conditioner 1 according to the disclosure may include the cover rotation motor 103, the first sensor 210, the second sensor 220, memory 250, and a processor 260. In addition, the air conditioner 1 may include the blower 30, the cover lift motor 102, and the fan device 160. The air conditioner 1 may further include at least one of the deodorizing device 40, the dust collector 50, the third sensor 230, or a user interface 240.

The memory 250 may store programs and data for controlling an operation of the air conditioner 1. The processor 260 may be electrically connected to various components of the air conditioner 1 and may control each of the components.

The processor 260 may be hardware and may include logic circuitry and arithmetic circuitry. The processor 260 may control the electrically connected components of the air conditioner 1 using the programs, instructions and/or data stored in the memory 250 for an operation of the air conditioner 1. The processor 260 and the memory 250 may be implemented as separate chips or a single chip. In addition, at least one processor and at least one memory may be provided.

The processor 260 may include at least one of a central processing unit (CPU), graphics processing unit (GPU), accelerated processing unit (APU), many integrated core (MIC), digital signal processor (DSP), neural processing unit (NPU), hardware accelerator, or machine learning accelerator.

The memory 250 may store programs, applications, instructions and/or data for the operation of the air conditioner 1, and may store data generated by the processor 260. For example, the memory 250 may store programs, applications, instructions and/or data for performing a cooling operation, a heating operation, and a dehumidifying operation.

The memory 250 may include volatile memory, such as a static random access memory (S-RAM) and a dynamic random access memory (D-RAM) for temporarily storing data. In addition, the memory 250 may include a non-volatile memory, such as a read only memory (ROM) and a flash memory for long-term storage of data.

The memory 250 may be implemented as memory embedded in the air conditioner 1 or as memory detachable from the air conditioner 1 depending on a data storage use. For example, data for driving the air conditioner 1 may be stored in the memory embedded in the air conditioner 1, and data for an extended function of the air conditioner 1 may be stored in the memory detachable from the air conditioner 1.

The blower 30 may rotate to create an air flow flowing inside the housing 10. The processor 260 may control the blower 30, and may adjust a rotation speed of the blower 30. Each of the plurality of blowers 30 may be independently controlled by the processor 260.

The fan device 160 may be controlled to discharge a portion of the air blown by the blower 30 through the discharge hole 16a, while the discharge hole 16a is open. The fan device 160 may boost the movement of the air generated by the blower 30. The amount of air discharged through the discharge hole 16a and the movement speed of the air may be increased by the operation of the fan device 160. The processor 260 may control the fan device 160, and may adjust a rotation speed of the fan device 160.

The deodorizing device 40 may remove odorous substances from the air. In addition, the deodorizing device 40 may sterilize the air by decomposing organic substances in the air. The deodorizing device 40 may include the light source device 41 and the photocatalytic filter 42. The processor 260 may control an operation of the deodorizing device 40. The processor 260 may control the power supplied to the deodorizing device 40. The processor 260 may adjust the power supplied to each of the light source device 41 and the photocatalytic filter 42.

The dust collector 50 may collect aerosols in the air that has passed through the deodorizing device 40. For example, the dust collector 50 may include an electric dust collector that generates ions to charge aerosols and collect the charged aerosols. The processor 260 may control an operation of the dust collector 50. The processor 260 may control the power supplied to the dust collector 50.

The cover lift motor 102 may generate power to move the discharge cover 110 up and down. The cover lift motor 102 may be connected to the rotating member 120 through the moving gear 102a. The rotating member 120 may rotate according to an operation of the cover lift motor 102, and the discharge cover 110 may move up or down according to the rotation of the rotating member 120. The processor 260 may change a moving direction of the discharge cover 110 by controlling a rotating direction of the cover lift motor 102.

The cover rotation motor 103 may generate power to rotate the discharge cover 110. The cover rotation motor 103 may be connected to the rotation transmission part 140 through the rotating gear 103a. The rotation transmission part 140 may rotate according to an operation of the cover rotation motor 103, and the discharge cover 110 may rotate clockwise or counterclockwise according to the rotation of the rotation transmission part 140. The processor 260 may change a rotating direction of the discharge cover 110 by controlling a rotating direction of the cover rotation motor 103. The rotation transmission part 140 may also be referred to as a discharge cover rotor, a rotation carrier, or a rotation transmitter. The rotation transmission part 140 may be referred to by various terms in addition to the above terms.

The cover rotation motor 103 may include a step motor. The step motor is a type of direct current (DC) brushless motor, and includes a stator and a rotor with small teeth that mesh with each other. The step motor may slowly rotate at a certain angle according to a current flowing in stator coils. In existing technologies, an open loop control that does not require feedback on a rotation and position of the step motor is used as a control method of the step motor. However, because the open loop control does not provide feedback on the rotation and position of the step motor, in a case where a rotating body rotated by the step motor deviates from a reference position, the rotating body may not be accurately rotated to a target position.

For example, the rotation transmission part 140 may deviate from a reference position due to various causes (e.g., external force, temporary malfunction of the motor, etc.). In a case where the rotation transmission part 140 deviates from the reference position, the discharge cover 110 also deviates from the reference position. Air may be discharged through the cover opening 117 of the discharge cover 110, and a wind direction may be adjusted by the rotation of the discharge cover 110. In a case where the discharge cover 110 deviates from the reference position, the cover opening 117 may not be accurately aligned with a target direction, and thus the wind direction adjustment may not be accurately performed.

In order to overcome the above, the air conditioner 1 according to the disclosure may easily move the rotation transmission part 140 to the reference position by providing feedback on the position of the rotation transmission part 140. The air conditioner 1 may provide feedback on the position of the rotation transmission part 140 by using a position identifier (e.g., the magnet 146) provided at a position of the rotation transmission part 140 and a plurality of sensors (e.g., the first sensor 210 and the second sensor 220) detecting the position identifier.

The first sensor 210, the second sensor 220, and the third sensor 230 may detect the position identifier (e.g., the magnet 146) fixed at a position of the rotation transmission part 140. Each of the first sensor 210, the second sensor 220, and the third sensor 230 may transmit an electrical signal (e.g., a magnet detection signal) corresponding to the detection of the position identifier (e.g., the magnet 146) to the processor 260. The processor 260 may identify the position of the rotation transmission part 140 based on the detection signals transmitted from each of the first sensor 210, the second sensor 220, and the third sensor 230.

In a case where the magnet 146 is provided at a position of the rotation transmission part 140, as the rotation transmission part 140 rotates clockwise or counterclockwise, the magnet 146 may also rotate clockwise or counterclockwise. For example, in FIG. 18, in a case where the rotation transmission part 140 starts to rotate clockwise in a state where the magnet 146 is positioned between the first sensor 210 and the third sensor 230 of the fan case 162, the magnet 146 may reach the first sensor 210 before the second sensor 220. In a case where the rotation transmission part 140 rotates clockwise in a state where the magnet 146 is positioned between the first sensor 210 and the second sensor 220, the magnet 146 may reach the second sensor 220 first.

The processor 260 may control the cover rotation motor 103 to move the rotation transmission part 140 to the reference position. For example, the processor 260 may control the cover rotation motor 103 to move the rotation transmission part 140 to the reference position based on a power off condition of the air conditioner 1 being satisfied. The reference position may be replaced by various terms such as a default position or a start position.

The power off condition of the air conditioner 1 may vary. For example, the processor 260 may determine that the power off condition is satisfied based on obtaining a power off command through the user interface 240 of the air conditioner 1 or a user device. The processor 260 may determine that the power off condition is satisfied based on an elapse of an operation time set through the user interface 240 of the air conditioner 1 or the user device.

The first position of the first sensor 210 may be set as the reference position of the rotation transmission part 140. In a case where the magnet 146 is detected by the first sensor 210, the processor 260 may determine that the rotation transmission part 140 has reached the reference position and may stop the operation of the cover rotation motor 103. In a case where the magnet 146 is detected by the second sensor 220 or the third sensor 230, the processor 260 may determine that the rotation transmission part 140 has not reached the reference position and may continuously operate the cover rotation motor 103.

For example, the processor 260 may control the cover rotation motor 103 to rotate the rotation transmission part 140 in a first direction (e.g., clockwise) based on the power off condition of the air conditioner 1 being satisfied. The processor 260 may control the cover rotation motor 103 to rotate the rotation transmission part 140 in a second direction (e.g., counterclockwise) based on the magnet 146 of the rotation transmission part 140 being detected by the second sensor 220.

Because the reference position is the position of the first sensor 210, in a case where the magnet 146 is first detected by the second sensor 220, the processor 260 may rotate the rotation transmission part 140 in the opposite direction, thereby moving the magnet 146 to the first position of the first sensor 210. By changing the rotation direction to allow the rotation transmission part 140 to move to the reference position, the rotation amount of the cover rotation motor 103 may be reduced, and the time required for the rotation transmission part 140 to reach the reference position may be reduced.

As another example, the processor 260 may control the cover rotation motor 103 to rotate the rotation transmission part 140 in the first direction (e.g., clockwise) based on the power off condition of the air conditioner 1 being satisfied, and may control the cover rotation motor 103 to continue to rotate the rotation transmission part 140 in the first direction (e.g., clockwise) based on the magnet 146 being detected by the third sensor 230. In a case where the rotation transmission part 140 continuously rotates in the first direction (e.g., clockwise) and the magnet 146 is detected by the first sensor 210, the processor 260 may stop the operation of the cover rotation motor 103. The third sensor 230 may be omitted, but the cover rotation motor 103 may be controlled more accurately by using the third sensor 230.

As still another example, in a case where the rotation transmission part 140 first rotates in the second direction (e.g., counterclockwise) and the magnet 146 is first detected by the third sensor 230, the rotation transmission part 140 may be controlled to rotate in the first direction (e.g., clockwise). In a case where the magnet 146 is detected by the first sensor 210, the processor 260 may determine that the rotation transmission part 140 has reached the reference position and may stop the operation of the cover rotation motor 103.

The reference position of the rotation transmission part 140 may also be set to the second position of the second sensor 220 or the third position of the third sensor 230. In a case where the reference position of the rotation transmission part 140 is set to the second position of the second sensor 220, the processor 260 may stop the operation of the cover rotation motor 103 in response to the magnet 146 being detected by the second sensor 220. In a case where the reference position of the rotation transmission part 140 is set to the third position of the third sensor 230, the processor 260 may stop the operation of the cover rotation motor 103 in response to the magnet 146 being detected by the third sensor 230.

The first sensor 210, the second sensor 220, and the third sensor 230 are not limited to a magnetic sensor. For example, the first sensor 210, the second sensor 220, and the third sensor 230 may be provided as an electrode sensor, and the rotation transmission part 140 may be provided with an electrode instead of the magnet 146. When the electrode of the rotation transmission part 140 rotates and approaches the first sensor 210, the second sensor 220, or the third sensor 230, the first sensor 210, the second sensor 220, or the third sensor 230 may detect an electric force of the electrode. Each of the first sensor 210, the second sensor 220, and the third sensor 230 may transmit an electrical signal (i.e., an electrode detection signal) corresponding to the detection of the electrode to the processor 260.

In addition to the above, various position identifiers and sensors may be used to identify the rotation and reference position of the rotation transmission part 140.

As such, the air conditioner 1 according to the disclosure may accurately move the rotation transmission part 140 to the reference position by feedback control of the cover rotation motor 103 rotating the rotation transmission part 140. Accordingly, failure of wind direction control caused by deviation of the rotation transmission part 140 from the reference position may be prevented.

The user interface 240 may obtain a user input, and may output various information. The user interface 240 may include an input interface and an output interface. A user may interact with the air conditioner 1 through the user interface 240.

The input interface may obtain a user input. The input interface may transmit an electrical signal corresponding to the user input to the processor 260. The user input may include various commands. For example, the input interface may obtain a power on command, a power off command, an operation mode setting command, a wind direction adjustment command, or a wind speed adjustment command. The user input may also be obtained from a user device (e.g., a mobile device, a smartphone). The processor 260 may control the air conditioner 1 based on the user input obtained through the input interface.

The input interface may include various buttons. For example, the input interface may include a power button to turn the air conditioner 1 on or off, an operation mode setting button to set an operation mode of the air conditioner 1, a wind direction adjustment button to adjust a wind direction, and a wind speed adjustment button to adjust a wind speed. Each button may include a visual indicator (e.g., text, an image, icon, etc.) that may indicate its function.

A "button" may be implemented as a user interface element (UI element), a tact switch, a push switch, a slide switch, a toggle switch, a micro switch, a touch switch, a touch pad, and/or a touch screen. In addition, a button may be replaced by a jog dial or a microphone, and the like.

The output interface may be controlled by the processor 260 to output various information related to an operation of the air conditioner 1. For example, the output interface may output various information such as an operation mode, wind direction, wind speed, and operation time of the air conditioner 1. The output interface may output visual information and/or auditory information.

The output interface may include at least one of a liquid crystal display (LCD) panel, an indicator, a light emitting diode (LED) panel, an organic light emitting diode (OLED) panel, a micro-LED panel, or a speaker.

The output interface may display information input by the user or information provided to the user on various screens. The output interface may display information related to the operation of the air conditioner 1 as at least one of an image or text. The output interface may display a graphical user interface (GUI) that enables control of the air conditioner 1.

The configuration of the air conditioner 1 is not limited to that shown in FIG. 19. The air conditioner 1 may further include other components in addition to the components shown, or may not include some of the components shown. For example, the air conditioner 1 may further include at least one of a temperature sensor detecting a temperature of air, a humidity sensor detecting a humidity of the air, or a communication interface communicating with an external device.

The communication interface may perform wired communication and/or wireless communication with an external device (e.g., a user device, a server, a home appliance, etc.). The communication interface may be controlled to transmit data to the external device or receive data from the external device.

The communication interface may include at least one of a short-range wireless communication circuit or a long-range wireless communication circuit. The communication interface may establish a direct (e.g., wired) communication channel or a wireless communication channel, and support the performance of the communication through the established communication channel. The communication interface may include a wireless communication circuit (e.g., a cellular communication circuit, a short-range wireless communication circuit, or a global navigation satellite system (GNSS) communication circuit) and/or a wired communication circuit (e.g., a local area network (LAN) communication circuit, or a power line communication circuit).

The communication interface may communicate with an external device through a short-range wireless communication network (e.g., Bluetooth, wireless fidelity (Wi-Fi) direct, or infrared data association (IrDA)) or a long-range wireless communication network (e.g., a legacy cellular network, a fifth generation (5G) network, a next-generation communication network, the Internet, or a computer network (e.g., LAN or wide area network (WAN)).

The short-range wireless communication circuit may include a Bluetooth communication circuit, a Bluetooth Low Energy (BLE) communication circuit, a near field communication circuit, a WLAN (Wi-Fi) communication circuit, and a Zigbee communication circuit, an infrared data association (IrDA) communication circuit, a Wi-Fi Direct (WFD) communication circuit, an ultrawideband (UWB) communication circuit, an Ant+ communication circuit, a microwave (uWave) communication circuit, etc., but is not limited thereto.

The long-range wireless communication circuit may include a communication circuit that performs various types of long-range wireless communication, and may include a mobile communication interface. The mobile communication interface transmits and receives radio signals with at least one of a base station, an external terminal, or a server on a mobile communication network.

In addition, the communication interface may communicate with an external device through an access point (AP).

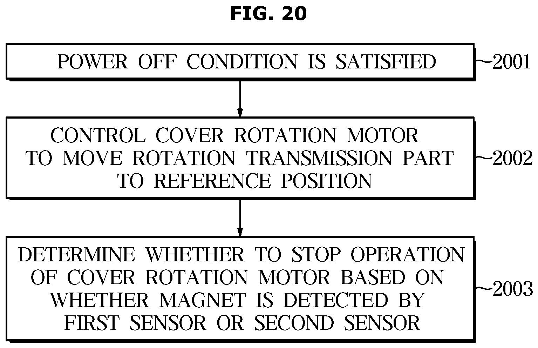

FIG. 20 is a flowchart briefly illustrating a method for controlling an air conditioner according to an embodiment of the disclosure.

Referring to FIG. 20, the processor 260 of the air conditioner 1 may identify whether a power off condition of the air conditioner 1 is satisfied in operation 2001. The power off condition of the air conditioner 1 may vary. For example, the processor 260 may determine that the power off condition is satisfied based on obtaining a power off command through the user interface 240 of the air conditioner 1 or a user device. The processor 260 may determine that the power off condition is satisfied based on an elapse of an operation time set through the user interface 240 of the air conditioner 1 or the user device.

The processor 260 of the air conditioner 1 may control the cover rotation motor 103 to move the rotation transmission part 140 to a reference position based on the power off condition of the air conditioner 1 being satisfied in operation 2002. The processor 260 of the air conditioner 1 may determine whether to stop an operation of the cover rotation motor 103 based on whether the magnet 146 is detected by the first sensor 210 or the second sensor 220 in operation 2003.

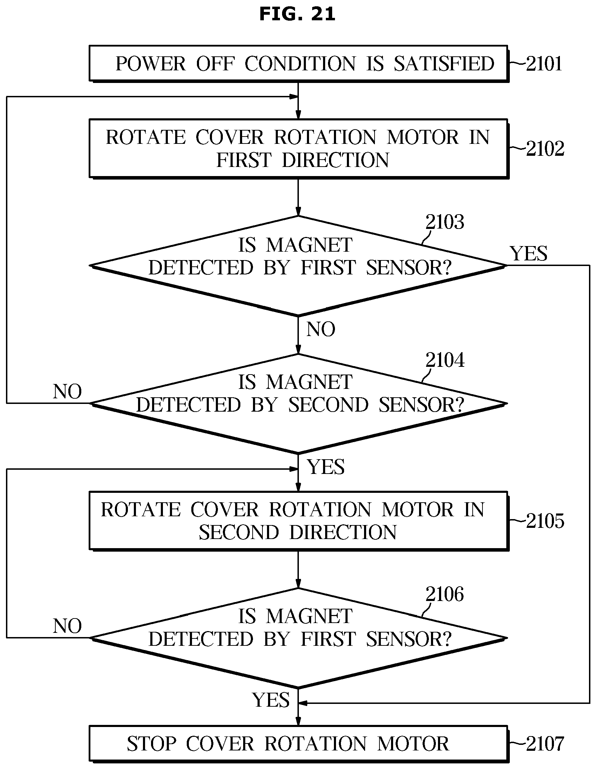

FIG. 21 is a flowchart illustrating a method for controlling an air conditioner according to an embodiment of the disclosure.

Referring to FIG. 21, the processor 260 of the air conditioner 1 may identify whether a power off condition of the air conditioner 1 is satisfied in operation 2101. Operation 2101 corresponds to operation 2001 described in FIG. 20.

The processor 260 of the air conditioner 1 may rotate the cover rotation motor 103 in a first direction (e.g., clockwise) in operation 2102, based on the power off condition of the air conditioner 1 being satisfied. When the cover rotation motor 103 rotates in the first direction, the rotation transmission part 140 may also rotate in the first direction.

The processor 260 may identify whether the magnet 146 of the rotation transmission part 140 is detected by the first sensor 210 in operation 2103, as the cover rotation motor 103 rotates in the first direction. In a case where the magnet 146 of the rotation transmission part 140 is detected by the first sensor 210, the processor 260 may stop the cover rotation motor 103 in operation 2107. The processor 260 may determine that the rotation transmission part 140 has reached the reference position based on the magnet 146 being detected by the first sensor 210.

In a case where the rotation transmission part 140 rotates in the first direction, the magnet 146 of the rotation transmission part 140 may be first detected by the second sensor 220 rather than the first sensor 210. The processor 260 may identify whether the magnet 146 of the rotation transmission part 140 is detected by the second sensor 220 according to the operation of the cover rotation motor 103 in operation 2104. In a case where the magnet 146 of the rotation transmission part 140 is not also detected by the second sensor 220, the processor 260 may continuously rotate the cover rotation motor 103 in the first direction until the magnet 146 is detected by the first sensor 210.

The processor 260 may rotate the cover rotation motor 103 in a second direction (e.g., counterclockwise) based on the magnet 146 of the rotation transmission part 140 being detected by the second sensor 220 in operation 2105. When the cover rotation motor 103 rotates in the second direction, the rotation transmission part 140 may also rotate in the second direction.

The processor 260 may identify whether the magnet 146 is detected by the first sensor 210 in operation 2106, as the cover rotation motor 103 rotates in the second direction. The processor 260 may rotate the cover rotation motor 103 in the second direction until the magnet 146 is detected by the first sensor 210. In a case where the magnet 146 of the rotation transmission part 140 is detected by the first sensor 210, the processor 260 may stop the cover rotation motor 103 in operation 2107.

According to an embodiment, an air conditioner 1 may include: a housing 10; a discharge cover 110 configured to cover a discharge hole 16a formed on an upper part of the housing, and including a cover opening 117 through which air is discharged; a rotation transmission part 140 coupled to the discharge cover and configured to rotate the discharge cover; a cover rotation motor 103 configured to rotate the rotation transmission part in a first direction or a second direction opposite to the first direction; a fan case 162 equipped with a discharge fan 161 configured to move air toward the discharge hole and the cover opening; a magnet 146 provided at a position of the rotation transmission part; a first sensor 210 disposed at a first position of the fan case and configured to detect the magnet; a second sensor 220 disposed at a second position of the fan case and configured to detect the magnet, the second position being spaced apart from the first position; and a processor 260. The processor 260 may be configured to control the cover rotation motor to move the rotation transmission part to a reference position based on a power off condition of the air conditioner being satisfied, and determine whether to stop an operation of the cover rotation motor based on whether the magnet is detected by the first sensor or the second sensor.

The processor may be configured to stop the operation of the cover rotation motor based on the magnet being detected by the first sensor.

The processor may be configured to control the cover rotation motor to rotate the rotation transmission part in the first direction based on the power off condition of the air conditioner being satisfied, and control the cover rotation motor to rotate the rotation transmission part in the second direction based on the magnet being detected by the second sensor.

The air conditioner 1 may further include a third sensor disposed at a third position of the fan case and configured to detect the magnet, the third position being spaced apart from the first position and the second position. The processor may be configured to control the cover rotation motor to rotate the rotation transmission part in the first direction based on the power off condition of the air conditioner being satisfied, and control the cover rotation motor to continuously rotate the rotation transmission part in the first direction based on the magnet being detected by the third sensor.

The magnet may be provided on an outer circumference of the rotation transmission part having a circular shape. The first sensor and the second sensor may be disposed on the fan case to face the magnet moved by rotation of the rotation transmission part. The first position and the second position may have a defined angle based on a center of the fan case.

The air conditioner 1 may further include a third sensor disposed at a third position of the fan case and configured to detect the magnet, the third position being spaced apart from the first position and the second position. A first angle between the first position and the second position, a second angle between the second position and the third position, and a third angle between the third position and the first position may be equal based on the center of the fan case.

The processor may be configured to determine that the power off condition is satisfied based on obtaining a power off command through a user interface or a user device

The processor may be configured to determine that the power off condition is satisfied based on an elapse of an operation time which is set through a user interface or a user device.

The cover rotation motor may include a step motor.

According to an embodiment, in a method for controlling an air conditioner including a discharge hole formed on an upper part of a housing, a discharge cover configured to cover the discharge hole and including a cover opening through which air is discharged, a fan case equipped with a discharge fan configured to move air toward the discharge hole and the cover opening, and a processor, the method may include: identifying, by the processor, whether a power off condition of the air conditioner is satisfied; controlling a cover rotation motor configured to rotate a rotation transmission part coupled to the discharge cover so as to move the rotation transmission part to a reference position based on the power off condition of the air conditioner being satisfied; identifying whether a magnet provided at a position of the rotation transmission part is detected by a first sensor disposed at a first position of the fan case or a second sensor disposed at a second position of the fan case, the second position being spaced apart from the first position; and determining whether to stop an operation of the cover rotation motor based on whether the magnet is detected by the first sensor or the second sensor.

The determining of whether to stop the operation of the cover rotation motor may include stopping the operation of the cover rotation motor based on the magnet being detected by the first sensor.

The controlling of the cover rotation motor may include: controlling the cover rotation motor to rotate the rotation transmission part in a first direction based on the power off condition of the air conditioner being satisfied; and controlling the cover rotation motor to rotate the rotation transmission part in a second direction based on the magnet being detected by the second sensor.

The air conditioner 1 may further include a third sensor disposed at a third position of the fan case and configured to detect the magnet, the third position being spaced apart from the first position and the second position. The controlling of the cover rotation motor may include: controlling the cover rotation motor to rotate the rotation transmission part in a first direction based on the power off condition of the air conditioner being satisfied, and controlling the cover rotation motor to continuously rotate the rotation transmission part in the first direction based on the magnet being detected by the third sensor.

The identifying of whether the power off condition is satisfied may include determining that the power off condition is satisfied based on obtaining a power off command through a user interface or a user device.

The identifying of whether the power off condition is satisfied may include determining that the power off condition is satisfied based on an elapse of an operation time which is set through a user interface or a user device.

According to the disclosure, the air conditioner and the method for controlling the same may easily move the discharge cover and the rotation transmission part that rotates the discharge cover to the reference position.

According to the disclosure, the air conditioner and the method for controlling the same may feedback control the cover rotation motor that rotates the rotation transmission part, thereby accurately moving the rotation transmission part to the reference position.

The effects that may achieved by the disclosure are not limited to the above-mentioned effects, and other effects not mentioned will be clearly understood by one of ordinary skill in the technical art to which the disclosure belongs from the following description.

The disclosed embodiments may be implemented in the form of a recording medium that stores instructions executable by a computer. The instructions may be stored in the form of program codes, and when executed by one or more processors individually or collectively, the instructions may create a program module to perform operations of the disclosed embodiments.

The machine-readable recording medium may be provided in the form of a non-transitory storage medium. Here, when a storage medium is referred to as "non-transitory," it may be understood that the storage medium is tangible and does not include a signal (e.g., an electromagnetic wave), but rather that data is semi-permanently or temporarily stored in the storage medium. For example, a "non-transitory storage medium" may include a buffer in which data is temporarily stored.

According to an embodiment, the method according to the various embodiments disclosed herein may be provided in a computer program product. The computer program product may be traded between a seller and a buyer as a product. The computer program product may be distributed in the form of a machine-readable storage medium (e.g., compact disc read only memory (CD-ROM)), or may be distributed (e.g., download or upload) through an application store (e.g., Play Store^{™}) online or directly between two user devices (e.g., smartphones). In the case of online distribution, at least a portion of the computer program product (e.g., downloadable app) may be stored at least semi-permanently or may be temporarily generated in a storage medium, such as memory of a server of a manufacturer, a server of an application store, or a relay server.

It will be appreciated that various embodiments of the disclosure according to the claims and description in the specification can be realized in the form of hardware, software or a combination of hardware and software.

Any such software may be stored in non-transitory computer readable storage media. The non-transitory computer readable storage media store one or more computer programs (software modules), the one or more computer programs include computer-executable instructions that, when executed by one or more processors of an electronic device individually or collectively, cause the electronic device to perform a method of the disclosure.

Any such software may be stored in the form of volatile or non-volatile storage such as, for example, a storage device like read only memory (ROM), whether erasable or rewritable or not, or in the form of memory such as, for example, random access memory (RAM), memory chips, device or integrated circuits or on an optically or magnetically readable medium such as, for example, a compact disk (CD), digital versatile disc (DVD), magnetic disk or magnetic tape or the like. It will be appreciated that the storage devices and storage media are various embodiments of non-transitory machine-readable storage that are suitable for storing a computer program or computer programs comprising instructions that, when executed, implement various embodiments of the disclosure. Accordingly, various embodiments provide a program comprising code for implementing apparatus or a method as claimed in any one of the claims of this specification and a non-transitory machine-readable storage storing such a program.

While the disclosure has been shown and described with reference to various embodiments thereof, it will be understood by those skilled in the art that various changes in form and details may be made therein without departing from the spirit and scope of the disclosure as defined by the appended claims and their equivalents.

## Claims

1. An air conditioner, comprising:
a housing;
a discharge cover configured to cover a discharge hole formed on an upper part of the housing, and including a cover opening through which air is discharged;
a rotation transmission part coupled to the discharge cover and configured to rotate the discharge cover;
a cover rotation motor configured to rotate the rotation transmission part in a first direction or a second direction opposite to the first direction;
a fan case equipped with a discharge fan configured to move air toward the discharge hole and the cover opening;
a magnet provided at a position of the rotation transmission part;
a first sensor disposed at a first position of the fan case and configured to detect the magnet;
a second sensor disposed at a second position of the fan case and configured to detect the magnet, the second position being spaced apart from the first position;
memory storing one or more computer programs; and
one or more processors communicatively coupled to the cover rotation motor, the first sensor, the second sensor, and the memory,
wherein the one or more computer programs include computer-executable instructions that, when executed by the one or more processors individually or collectively, cause the air conditioner to:
move the rotation transmission part, via the cover rotation motor, to a reference position based on a power off condition of the air conditioner being satisfied, and
determine whether to stop an operation of the cover rotation motor based on whether the magnet is detected by the first sensor or the second sensor.

2. The air conditioner of claim 1, wherein the one or more computer programs further include computer-executable instructions that, when executed by the one or more processors individually or collectively, cause the air conditioner to stop the operation of the cover rotation motor based on the magnet being detected by the first sensor.

3. The air conditioner of claim 2, wherein the one or more computer programs further include computer-executable instructions that, when executed by the one or more processors individually or collectively, cause the air conditioner to:
control the cover rotation motor to rotate the rotation transmission part in the first direction based on the power off condition of the air conditioner being satisfied, and
control the cover rotation motor to rotate the rotation transmission part in the second direction based on the magnet being detected by the second sensor.

4. The air conditioner of claim 2, further comprising:
a third sensor disposed at a third position of the fan case and configured to detect the magnet, the third position being spaced apart from the first position and the second position,
wherein the one or more computer programs further include computer-executable instructions that, when executed by the one or more processors individually or collectively, cause the air conditioner to:
control the cover rotation motor to rotate the rotation transmission part in the first direction based on the power off condition of the air conditioner being satisfied, and
control the cover rotation motor to continuously rotate the rotation transmission part in the first direction based on the magnet being detected by the third sensor.

5. The air conditioner of claim 1,
wherein the magnet is provided on an outer circumference of the rotation transmission part having a circular shape,
wherein the first sensor and the second sensor are disposed on the fan case to face the magnet moved by rotation of the rotation transmission part, and
wherein the first position and the second position have a defined angle based on a center of the fan case.

6. The air conditioner of claim 5, further comprising:
a third sensor disposed at a third position of the fan case and configured to detect the magnet, the third position being spaced apart from the first position and the second position,
wherein a first angle between the first position and the second position, a second angle between the second position and the third position, and a third angle between the third position and the first position are equal based on the center of the fan case.

7. The air conditioner of claim 1, wherein the one or more computer programs further include computer-executable instructions that, when executed by the one or more processors individually or collectively, cause the air conditioner to determine that the power off condition is satisfied based on obtaining a power off command through a user interface or a user device.

8. The air conditioner of claim 1, wherein the one or more computer programs further include computer-executable instructions that, when executed by the one or more processors individually or collectively, cause the air conditioner to determine that the power off condition is satisfied based on an elapse of an operation time which is set through a user interface or a user device.

9. The air conditioner of claim 1, wherein the cover rotation motor includes a step motor.

10. A method for controlling an air conditioner comprising a discharge hole formed on an upper part of a housing, a discharge cover configured to cover the discharge hole and including a cover opening through which air is discharged, a fan case equipped with a discharge fan configured to move air toward the discharge hole and the cover opening, and a processor, the method comprising:
identifying, by the processor, whether a power off condition of the air conditioner is satisfied;
controlling a cover rotation motor to rotate a rotation transmission part coupled to the discharge cover so as to move the rotation transmission part to a reference position based on the power off condition of the air conditioner being satisfied;
identifying whether a magnet provided at a position of the rotation transmission part is detected by a first sensor disposed at a first position of the fan case or a second sensor disposed at a second position of the fan case, the second position being spaced apart from the first position; and
determining whether to stop an operation of the cover rotation motor based on whether the magnet is detected by the first sensor or the second sensor.

11. The method of claim 10, wherein the determining of whether to stop the operation of the cover rotation motor comprises stopping the operation of the cover rotation motor based on the magnet being detected by the first sensor.

12. The method of claim 11, wherein the controlling of the cover rotation motor comprises:
controlling the cover rotation motor to rotate the rotation transmission part in a first direction based on the power off condition of the air conditioner being satisfied; and
controlling the cover rotation motor to rotate the rotation transmission part in a second direction based on the magnet being detected by the second sensor.

13. The method of claim 11, wherein the air conditioner further comprises a third sensor disposed at a third position of the fan case and configured to detect the magnet, the third position being spaced apart from the first position and the second position, and
wherein the controlling of the cover rotation motor comprises:
controlling the cover rotation motor to rotate the rotation transmission part in a first direction based on the power off condition of the air conditioner being satisfied, and
controlling the cover rotation motor to continuously rotate the rotation transmission part in the first direction based on the magnet being detected by the third sensor.

14. The method of claim 10, wherein the identifying of whether the power off condition is satisfied comprises determining that the power off condition is satisfied based on obtaining a power off command through a user interface or a user device.

15. The method of claim 10, wherein the identifying of whether the power off condition is satisfied comprises determining that the power off condition is satisfied based on an elapse of an operation time which is set through a user interface or a user device.
